(19) Europäisches Patentamt
European Patent Office
Office européen des brevets

(11) **EP 3 273 673 B1**

(12) **EUROPEAN PATENT SPECIFICATION**

(45) Date of publication and mention of the grant of the patent:
**05.05.2021 Bulletin 2021/18**

(51) Int Cl.:
*H04N 1/40* (2006.01)     *B33Y 50/00* (2015.01)
*B29C 64/386* (2017.01)     *B29C 64/118* (2017.01)

(21) Application number: **17179792.1**

(22) Date of filing: **05.07.2017**

(54) **INFORMATION PROCESSING APPARATUS, FABRICATING SYSTEM, AND DATA PROCESSING METHOD**

INFORMATIONSVERARBEITUNGSVORRICHTUNG, HERSTELLUNGSSYSTEM UND DATENVERARBEITUNGSVERFAHREN

APPAREIL DE TRAITEMENT D'INFORMATIONS, SYSTÈME DE FABRICATION ET PROCÉDÉ DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2016 JP 2016141800**

(43) Date of publication of application:
**24.01.2018 Bulletin 2018/04**

(73) Proprietor: **Ricoh Company, Ltd.**
**Tokyo 143-8555 (JP)**

(72) Inventors:
• **ISHII, Shigeyuki**
  **Ohta-ku, Tokyo 143-8555 (JP)**
• **YUKUMOTO, Reiji**
  **Ohta-ku, Tokyo 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**EP-A2- 2 930 694**     **US-A1- 2015 021 832**
**US-A1- 2015 310 148**

• **PRASHANT KULKARNI ET AL: "A review of process planning techniques in layered manufacturing", RAPID PROTOTYPING JOURNAL, vol. 6, no. 1, 1 March 2000 (2000-03-01), pages 18-35, XP055160953, ISSN: 1355-2546, DOI: 10.1108/13552540010309859**

EP 3 273 673 B1

**Description**

Technical Field

Embodiments of the present disclosure relate to an information processing apparatus, a fabricating system, and a data processing method.

Related Art

There are various lamination fabricating apparatuses to fabricate an object presented in three-dimensional (3D) model data by a variety of methods. The lamination fabricating apparatus piles up a material from bottom up based on slice data, which is made by slicing a solid shape layer by layer, to fabricate a 3D-fabricated object.

It is not necessary to fix in which direction the 3D-fabricated object is laminated. The laminating direction may be appropriately chosen by a user. By using a feature like this, the lamination fabricating apparatus relocates the 3D model data to minimize fabrication time (e.g., JP-2012-096426-A).

However, in a conventional lamination fabricating apparatus, the laminating direction of the 3D-fabricated object is not considered. Therefore, a preferable strength of the fabricated object may not be obtained.

As the 3D-fabricated object made by the lamination fabricating apparatus is laminated with the material from bottom up, the 3D-fabricated object has a multi-layer structure in which the many layers of material are piled up in a vertical direction. Therefore, the strength against tension in the vertical direction tends to be lower than the strength against tension in the horizontal direction.

An object of this disclosure is to provide an information processing apparatus that can reinforce a fabricated object in a predetermined direction.

US 2015/021832 A1 discloses a 5D printer, which additively manufactures an object.

US 2015/310148 A1 discloses incorporating a finite element analysis algorithm for simulation in order to extract the macro physical properties of a part being manufactured.

PRASHANT KULKARNI ET AL: "A Review of Process Planning Techniques in Layered Manufacturing", RAPID PROTOTYPING JOURNAL, vol. 6, no. 1, 1 March 2000 discloses layered manufacturing.

EP 2 930 694 A2 discloses a system and a method automate metrology, measurement, and model correction of a 3D model for 3D printability.

SUMMARY

In order to achieve the above-described object, there is provided an information processing apparatus as described in appended claims. Advantageous embodiments are defined by the dependent claims.

There is provided an information processing apparatus, in accordance with claim 1, including a display unit configured to display shape data of the 3D-fabricated object on a display device, a direction receiver configured to receive a direction regarding a strength of the shape defined by the data displayed on the display device, and a relocation unit configured to convert the data to rotate the shape to reinforce the 3D-fabricated object in the direction received by the direction receiver from a strength before being rotated.

Further, there is provided a method for data processing to laminate a material to fabricate a 3D-fabricated object, in accordance with claim 10.

Advantageously, the method includes displaying a shape data of the 3D-fabricated object displayed on a display device, receiving a direction regarding a strength of a shape displayed on the display device, and rotating the shape data of the 3D-fabricated object to reinforce the 3D-fabricated object in the received direction.

Accordingly, a 3D-fabricated object can be reinforced against a force in a predetermined direction.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is a schematic block diagram illustrating a fabricating system according to a first embodiment of the present disclosure;
FIG. 2 is a schematic block diagram illustrating an example of a hardware configuration of an information processing apparatus illustrated in FIG. 1;
FIGS. 3A and 3B are schematic block diagrams illustrating an example of a configuration of a lamination fabricating apparatus illustrated in FIG. 1;
FIG. 4 is a schematic block diagram illustrating an example of a functional configuration of the fabricating system including the information processing apparatus and the lamination fabricating apparatus illustrated in FIG. 1;
FIGS. 5A and 5B are schematic views illustrating examples of slice data and a G code used in the laminate fabricating system;
FIGS. 6A, 6B, and 6C are schematic views illustrating an example of an input of a direction to reinforce a 3D-fabricated object and a rotation of 3D model;
FIGS. 7A, 7B, and 7C are schematic views illustrating an example of the rotation of the 3D model;
FIG. 8 is a flowchart illustrating an example of a procedure for relocating the 3D model data executed by the information processing apparatus according to the first embodiment;

FIG. 9 is a flowchart illustrating an example of a procedure for relocating the 3D model data executed by the information processing apparatus according to a first modification of the first embodiment;

FIGS. 10A, 10B, 10C, and 10D are schematic views illustrating an example of a method of a print data generation from the slice data in order to fabricate the 3D-fabricated object;

FIG. 11 is a flowchart illustrating an example of a procedure for relocating the 3D model data executed by the information processing apparatus according to a second modification of the first embodiment;

FIGS. 12A and 12B are schematic views illustrating an overhang and a support;

FIG. 13 is a flowchart illustrating an example of a procedure for relocating the 3D model data executed by the information processing apparatus according to a third modification of the first embodiment;

FIG. 14 is a flowchart illustrating an example of a procedure for relocating the 3D model data executed by the information processing apparatus according to a fourth modification of the first embodiment;

FIG. 15 is a schematic block diagram illustrating an example of a functional configuration of a fabricating system including an information processing apparatus and the lamination fabricating apparatus according to a second embodiment;

FIGS. 16A and 16B are schematic views illustrating an example of a plurality of directions received by a strength direction receiver to reinforce the 3D-fabricated object;

FIG. 17 is a flowchart illustrating an example of a procedure for relocating the 3D model data executed by the information processing apparatus according to the second embodiment;

FIG. 18 is a flowchart illustrating an example of a procedure for relocating the 3D model data executed by the information processing apparatus according to a first modification of the second embodiment;

FIGS. 19A and 19B are schematic views illustrating an example of an input priority;

FIG. 20 is a flowchart illustrating an example of a procedure for relocating the 3D model data executed by the information processing apparatus according to a second modification of the second embodiment;

FIG. 21 is a flowchart illustrating an example of a procedure for relocating the 3D model data executed by the information processing apparatus according to a third modification of the second embodiment;

FIG. 22 is a flowchart illustrating an example of a procedure for relocating the 3D model data executed by the information processing apparatus according to a fourth modification of the second embodiment; and

FIG. 23 is a flowchart illustrating an example of a procedure for relocating the 3D model data executed by the information processing apparatus according to a fifth modification of the second embodiment.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

A fabricating system in the present embodiment receives an input indicating a direction in which the reinforcement of a 3D-fabricated object against tension is desired. That is, the lamination fabricating system converts 3D model data to rotate the 3D-fabricated object so that tensile strength of the 3D-fabricated object in the designated direction becomes higher than before the rotation. More specifically, the 3D model data is relocated so that tensile strength of the 3D-fabricated object in the designated direction becomes higher. Therefore, a tensile strength of the 3D-fabricated object, which has the multi-layer structure, in the designated direction can be raised.

Shape Data may represents a solid shape. In the present embodiment, the shape data of the 3D-fabricated object is referred to as the 3D model data as an example term for description.

Fabrication data is information that a lamination fabricating apparatus interprets to operate and fabricate three dimensional object. For example, the fabrication data includes order data, control content data, and setting data. In the present embodiment, the fabrication data is referred to as print data as an example term for description.

A direction regarding the strength is information which specifies the direction of a 3D model having different strengths with the directions of the 3D-fabricated object. For example, the preferable direction, in which the strength is high, is cited as an example. In reverse, there can be the preferable direction in which the strength is low in consideration of easiness to demolish.

In describing embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

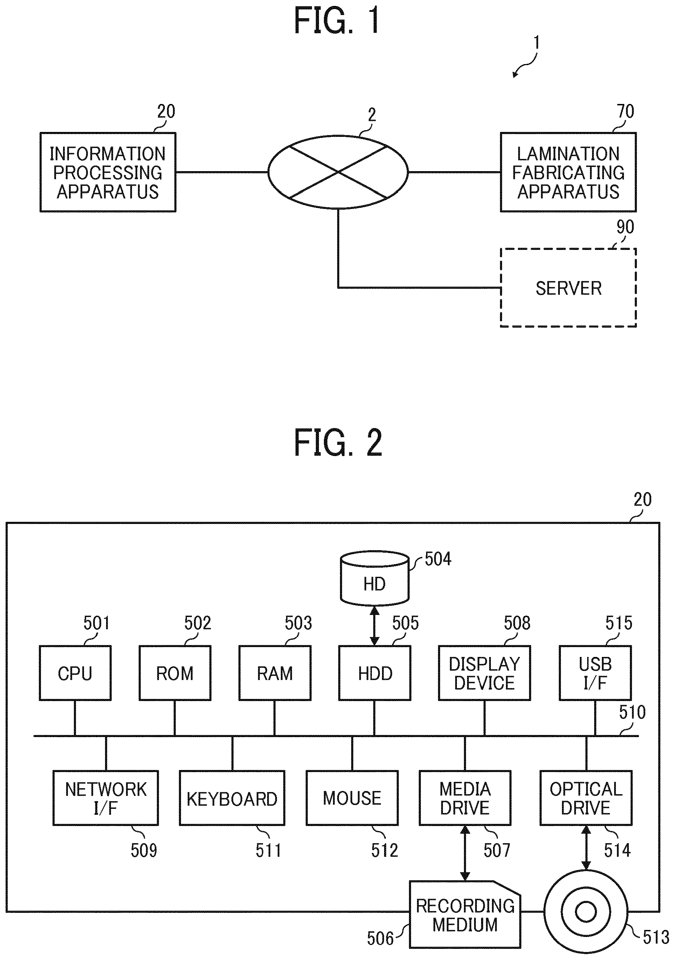

Referring now to the drawings, wherein like reference numerals designate identical or corresponding parts throughout the several views thereof, and particularly to FIG. 1, a fabricating system according to embodiments of the present disclosure is described. As used herein, the singular forms "a", "an", and "the" are intended to include the plural forms as well, unless the context clearly indicates otherwise.

FIG. 1 is a schematic block diagram of an example of a fabricating system 1 according to the present disclosure. The fabricating system 1 includes an information processing apparatus 20 and a lamination fabricating apparatus 70 coupled to each other via a network 2. The network 2 may be a local area network (LAN), a wide area network (WAN), or the Internet. Alternatively, the information processing apparatus 20 and the lamination fabricating apparatus 70 may be connected each other via an exclusive line like a universal serial bus (USB) cable. The network 2 or the exclusive line may be wired, or some or all of the network 2 may be wireless connection, such as a wireless LAN or Bluetooth (registered trademark).

The information processing apparatus 20 may be a personal computer (PC), but any apparatus that can run a program to be described later may be used. In addition, the information processing apparatus 20 may be a tablet terminal, a smartphone, a personal digital assistant (PDA), a cellular phone, a wearable PC, a game apparatus, a car navigation terminal, an electronic white board, or a projector.

The information processing apparatus 20 analyzes the 3D model data, constructs the 3D model that is a solid shape, and slices the 3D model at even intervals (lamination pitch) to generate slice data. The slice data is then converted into print data in the G code format, and the print data is sent to the lamination fabricating apparatus 70. The print data may be sent to the lamination fabricating apparatus 70 in a state stored in any recording medium that can store the print data, such as a USB memory or a secure digital (SD) card. The lamination fabricating apparatus 70 may read the print data from the recording medium attached to a recording-media interface (I/F). Accordingly, the network 2 may be omitted.

The information processing apparatus 20 and the lamination fabricating apparatus 70 may be integrated. The lamination fabricating apparatus 70 may have a function of the information processing apparatus 20 and generate the print data from the 3D model data. The information processing apparatus 20 may send the 3D model data to a server 90, and then the server 90 may send the print data to the lamination fabricating apparatus 70 directly or via the information processing apparatus 20.

The lamination fabricating apparatus 70 fabricates the 3D-fabricated object based on the print data. There are a various fabricating methods such as fused deposition modeling (FDM), material jetting, binder jetting, selective laser sintering (SLS), and stereolithography (SLA) for the lamination fabricating apparatus 70. The FDM is a fabricating method in which mainly resin fused by heat is extruded from a nozzle and laminated to fabricate, that is, to build up in layers, the 3D-fabricated object. Fluid material such as resin or molten metal may be used by the lamination fabricating apparatus 70. The material jetting is the fabricating method in which resin discharged from an inkjet head is solidified in the multilayer structure by ultraviolet rays. The binder jetting is the fabricating method in which a liquid binder is discharged from an inkjet head, and plaster or resin powder is solidified layer by layer. The SLS is the fabricating method in which a powdered material is irradiated with a laser to be sintered. The SLA is the fabricating method in which light curable resin is solidified layer by layer with an ultraviolet laser. In the present embodiment, an example of the FDM lamination fabricating apparatus 70 is described for the sake of explanatory convenience, but the relocation of the 3D model data in the present embodiment is adaptable regardless of the method.

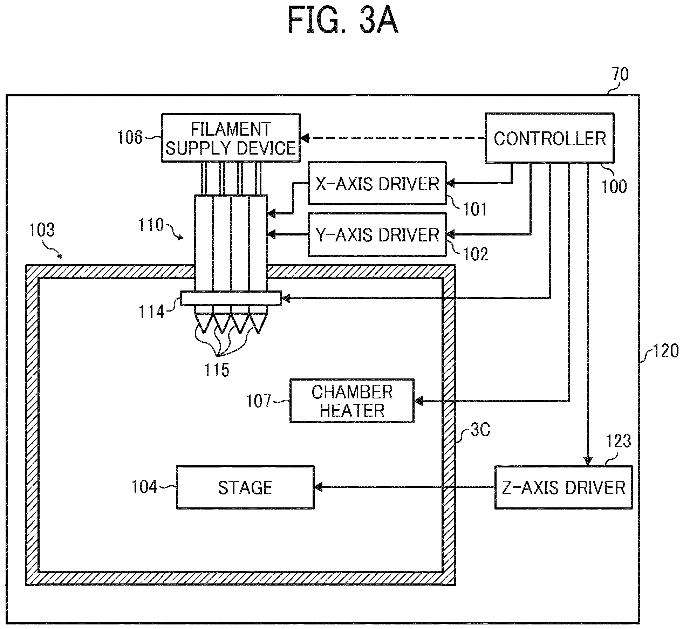

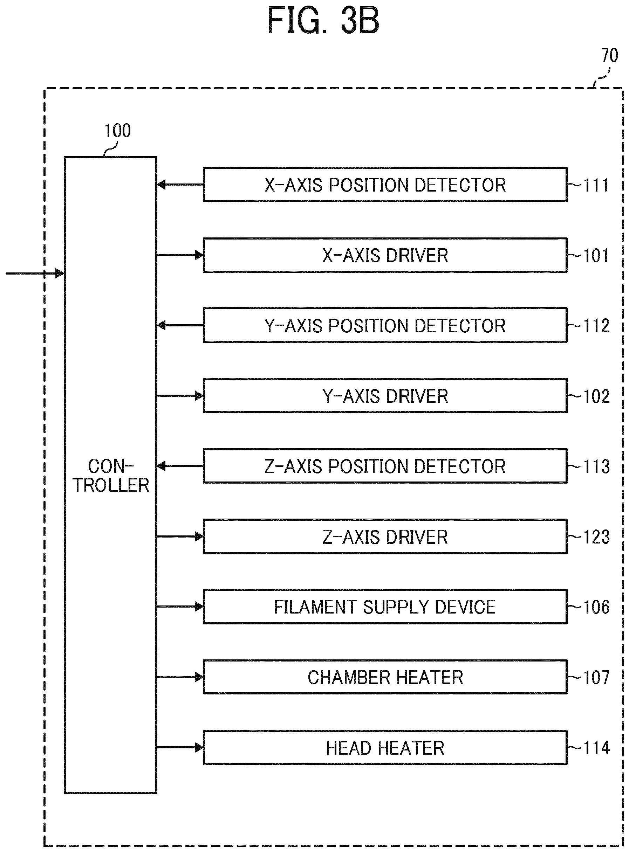

Referring to FIGS. 2, 3A, and 3B, a hardware configuration of the information processing apparatus 20 and the lamination fabricating apparatus 70 is described below.

FIG. 2 is a schematic block diagram illustrating the hardware configuration of the information processing apparatus 20. The information processing apparatus 20 includes a central processing unit (CPU) 501, a read only memory (ROM) 502, a random access memory (RAM) 503, a hard disk drive (HDD) 505, a display device 508, a network interface (I/F) 509, a keyboard 511, a mouse 512, a media drive 507, an optical drive 514, a USB I/F 515, and a data bus line 510 to connect these device electrically, such as an address bus or a data bus.

The CPU 501 controls actions of the entire information processing apparatus 20. The ROM 502 stores a program for controlling the CPU 501 such as an Initial Program Loader (IPL). The RAM 503 is used as a work area for the CPU 501. A hard disk (HD) 504 stores a program, an operating system (OS), and various data. The HDD 505 controls reading or writing of various data to or from the HD 504 under control of the CPU 501. The network I/F 509 is an interface for data communication through the network 2. The keyboard 511 is one example of input device provided with a plurality of keys for a user to input characters, numerals, or various instructions. The mouse 512 is one example of input device for the user to select a specific instruction or execution, select a target for processing, or move a cursor being displayed. The media drive 507 controls reading or writing of data with respect to a recording medium 506 such as a flash memory. The optical drive 514 reads or writes various data with respect to an optical disc 513 such as a compact disc (CD)-ROM, a digital versatile disc (DVD) or a blue-ray disc, which is one example of removable recording medium. The display device 508 displays various types of information, such as a cursor, menu, window, characters, or image. The display device 508 may be a projector. The USB I/F 515 is an interface to be connected with the USB cable or the USB memory.

FIG. 3A is a schematic block diagram illustrating the configuration of the lamination fabricating apparatus 70 according to the present embodiment. The lamination fabricating apparatus 70 includes a chamber 103 in a main body frame 120. An inside of the chamber 103 is a processing space. A stage 104 is provided as a placing table in the chamber 103 to fabricate the 3D-fabricated object. On the stage 104, the 3D-fabricated object is fabricated.

A fabricating head 110 is disposed above the stage 104 in the chamber 103. The fabricating head 110 includes discharging nozzles 115, which discharge a filament as a fabricating material, at the bottom. In the present embodiment, the fabricating head 110 includes the four discharging nozzles 115, but the number of the discharging nozzles 115 is arbitrary. Additionally, the fabricating head 110 includes a head heater 114 as a fabricating material heater to heat the filament supplied to each discharging nozzle 115.

The filament (in thin wire shape) is set to the lamination fabricating apparatus 70 in rolled state and supplied by a filament supply device 106 to each discharging nozzle 115 of the fabricating head 110. The filament may be different for each discharging nozzle 115. Alternatively, the filament may be same. In the present embodiment, the filament is supplied by the filament supply device 106, fused by the head heater 114, and extruded in a fused state from the predetermined discharging nozzle 115 to laminate the multi-layer structure, which is the 3D-fabricated object, layer by layer sequentially on the stage 104.

A support material, which does not form the 3D-fabricated object, can be supplied to the discharging nozzle 115 of the fabricating head 110 in place of the filament as the fabricating material. The support material is generally made of a different material from the filament as the fabricating material. Eventually, the support material is removed from the 3D-fabricated object made of the filament. The support material is fused by the head heater 114, and extruded in a fused state from the predetermined discharging nozzle 115 to laminate sequentially layer by layer.

The fabricating head 110 is held on an X-axis driver 101 extending along a lateral direction of the lamination fabricating apparatus 70, and movable along a longitudinal direction of the X-axis driver 101 (X-axis direction). The fabricating head 110 is movable along the lateral direction of the lamination fabricating apparatus 70 (X-axis direction) by a driving force of the X-axis driver 101. Both ends of the X-axis driver 101 are held on a Y-axis driver 102 extending along a front-back direction of the lamination fabricating apparatus 70, and slidable along a longitudinal direction of the Y-axis driver 102 (Y-axis direction). As the X-axis driver 101 moves along Y-axis direction by a driving force of the Y-axis driver 102, the fabricating head 110 can move along the Y-axis direction.

Additionally, in the present embodiment, a chamber heater 107 is disposed in the chamber 103 (processing space) to heat the inside of the chamber 103 as a processing space heater. In the present embodiment, a temperature in the chamber 103 is desirably maintained at a target temperature during the fabricating process in order to fabricate the 3D-fabricated object by the FDM. Therefore, in the present embodiment, a preheating process is performed to raise the temperature in the chamber 103 to the target temperature before the fabricating process. The chamber heater 107 heats the inside of the chamber 103 to raise the temperature in the chamber 103 to the target temperature during the preheating process, and heats the inside of the chamber 103 to maintain the target temperature in the chamber 103 during the fabricating process. The chamber heater 107 is controlled by a controller 100 described below.

FIG. 3B is a schematic control block diagram of the lamination fabricating apparatus 70 in the present embodiment. An X-axis position detector 111 is disposed in the lamination fabricating apparatus 70 to detect an X-axis position of the fabricating head 110. A detection result generated by the X-axis position detector 111 is sent to the controller 100. The controller 100 controls the X-axis driver 101 based on the detection result to move the fabricating head 110 to a target X-axis position.

In the present embodiment, a Y-axis position detector 112 is disposed in the lamination fabricating apparatus 70 to detect a Y-axis position of the X-axis driver 101 (Y-axis position of the fabricating head 110). A result detected by the Y-axis position detector 112 is sent to the controller 100. The controller 100 controls the Y-axis driver 102 based on the detected result to move the fabricating head 110 on the X-axis driver 101 to a target Y-axis position.

Additionally, in the present embodiment, a Z-axis position detector 113 is disposed in the lamination fabricating apparatus 70 to detect a Z-axis position of the stage 104. A result detected by the Z-axis position detector 113 is sent to the controller 100. The controller 100 controls a Z-axis driver 123 based on the detected result to move the stage 104 to a target Z-axis position.

As the controller 100 controls the movements of the fabricating head 110 and the stage 104, relative 3D positions between the fabricating head 110 and the stage 104 is set to a target 3D position in the chamber 103.

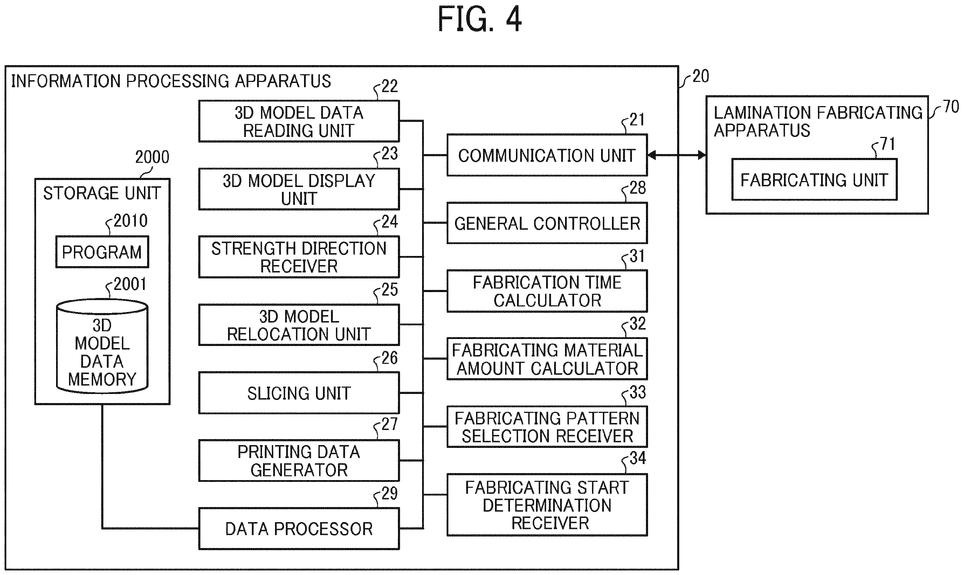

FIG. 4 is a schematic block diagram illustrating a functional configuration of the fabricating system 1 including the information processing apparatus 20 and the lamination fabricating apparatus 70.

The information processing apparatus 20 runs a program 2010 to provide main functions to be described below

The information processing apparatus 20 includes a communication unit 21, a 3D model data reading unit 22, a 3D model display unit 23, a strength direction receiver 24, a 3D model relocation unit 25, a slicing unit 26, a print data generator 27, a general controller 28, a fabrication time calculator 31, a fabricating material amount calculator 32, a fabricating pattern selection receiver 33, a fabricating start determination receiver 34, and data processor 29. As any of the elements illustrated in FIG. 2 operates based on the instructions of the CPU 501 according to the program 2010 expanded from the HD 504 to the RAM 503, the functions mentioned above are implemented.

Additionally, the information processing apparatus 20 includes a storage unit 2000 built by the HD 504 illustrated in FIG. 2. The storage unit 2000 includes a 3D model data memory 2001 and stores the program 2010. The program 2010 is distributed in a state stored in the recording medium 506 or the optical disc 513 illustrated in FIG. 2. Alternatively, the program 2010 is delivered from the server 90. The program 2010 may be referred to as a printer driver or an application program. The program 2010 in the present embodiment may include two or more programs such as the printer driver, the application program, and others.

The 3D model data memory 2001 stores the 3D model data. The 3D model data may be the data read from a portable memory (or recording medium) such as the USB memory by the information processing apparatus 20 or the lamination fabricating apparatus 70, the data downloaded from the server 90 via the network 2, or the data generated by a 3D application operated on the information processing apparatus 20. The 3D application is software called 3D computer-aided design (CAD) or 3D computer graphics (CG) for example. Standard Triangulated Language (STL) is known as a data format of the 3D model data output by the 3D application, but the data format is not limited and may be 3D Manufacturing Format (3MF), Polygon File Format (PLY), or Wavefront Object File Format (OBJ). Table 1 is an example of the 3D model data.

Table 1

```
Solid ascii
  facet normal 0.000000 0.000000 1.000000
    outer loop
      vertex 0.000000 2.000000 5.000000
      vertex -2.000000 2.000000 5.000000
      vertex 0.000000 0.000000 5.000000
    endloop
  endfacet
  facet normal 0.000000 0.000000 1.000000
    outer loop
      vertex 0.000000 0.000000 5.000000
      vertex -2.000000 2.000000 5.000000
      vertex -2.000000 0.000000 5.000000
    endloop
  endfacet
  facet normal 0.000000 0.000000 -1.000000
    outer loop
      vertex 0.000000 0.000000 0.000000
      vertex -2.000000 0.000000 0.000000
      vertex 0.000000 2.000000 0.000000
    endloop
  endfacet
  ... (omitted)
Endsolid
```

Table 1 presents the 3D model data in the STL, which is a format that presents the shape using triangle polygon. Data of one triangle includes vertexes of the triangle and a normal vector to the triangle in the 3D space.

Lines from "facet" to "endfacet" illustrated in Table 1 represent the data of the one triangle. Specifically, "normal" represents the normal vector to the triangle, three "vertex" represent coordinates of three vertexes of the triangle, respectively. Repetition of triangle data presents the 3D-fabricated object. As a surface of the 3D model is represented by the respective vertexes of the triangle, the slice data can be calculated by geometric calculation.

Any format can be used as long as the 3D model data presents the 3D shape. If a surface profile of the solid object is known, the information processing apparatus 20 can divide the surface profile into triangles and convert the triangles into the 3D model data in STL format.

The communication unit 21 of the information processing apparatus 20 is implemented by the program 2010 or OS executed by the CPU 501 or the network I/F 509 illustrated in FIG. 2. The communication unit 21 communicates with the lamination fabricating apparatus 70. More specifically, the print data converted from the 3D model data is send to the lamination fabricating apparatus 70.

The general controller 28 is implemented by the execution of the program 2010 with the CPU 501 illustrated in FIG. 2 and controls the entire lamination fabricating apparatus 70. In other words, the general controller 28 invokes each function illustrated in FIG. 4 as needed, to implement the function of the lamination fabricating apparatus 70 in the present embodiment.

The 3D model data reading unit 22 is implemented by the execution of the program 2010 with the CPU 501 and the HDD 505 illustrated in FIG. 2 and reads the 3D model data from the 3D model data memory 2001.

The 3D model display unit 23 is implemented by the execution of the program 2010 with the CPU 501 illustrated in FIG. 2. The 3D model display unit 23 converts the 3D model data to the 3D model presented in a perspective view and displays the 3D model on the display device 508. The 3D model display unit 23 serves as a display unit. This 3D model has 3D coordinates and the 3D model is projected on the display device 508. The 3D model is the converted shape data of the 3D-fabricated object based on the 3D model data.

The strength direction receiver 24 is implemented by the execution of the program 2010 with the CPU 501, the keyboard 511, the mouse 512 illustrated in FIG. 2, or a touch panel. The strength direction receiver 24 serves as a direction receiver. The strength direction receiver 24 receives a direction input by the user with the keyboard 511 or the mouse 512 in regard to the 3D model displayed by the 3D model display unit 23. This direction is the direction in which reinforcement against tension is desired.

The 3D model relocation unit 25 is implemented by the execution of the program 2010 with the CPU 501 illustrated in FIG. 2 and converts the 3D model data based on the direction received by the strength direction receiver 24. The 3D model relocation unit 25 serves as a relocation unit.

The slicing unit 26 is implemented by the execution of the program 2010 with the CPU 501 illustrated in FIG. 2 and slices the 3D model at a predetermined pitch to generate the slice data. In other words, the 3D model is sliced at an equal interval (interval of the laminated layer) in the z-axis direction, and a cross-sectional shape of the sliced 3D model data at each z coordinate is generated. The laminated layer can be variable or fixed. Since the 3D model data is presented in polygons, when a z coordinate is determined, an x and y coordinates of the polygon at the z coordinate are obtained. The slice data is an aggregation of the x and y coordinates of cross-section of the polygon.

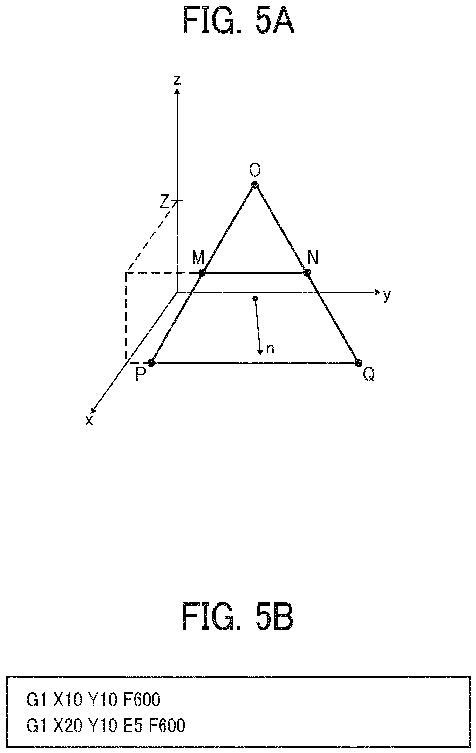

The print data generator 27 is implemented by the execution of the program 2010 with the CPU 501 illustrated in FIG. 2 and generates the print data based on the slice data. The print data is presented in G code, for example, but any print data format that the lamination fabricating apparatus 70 can interpret is used. An example of the G code is described below with reference to FIG. 5B.

The fabrication time calculator 31 is implemented by the execution of the program 2010 with the CPU 501 illustrated in FIG. 2. The fabrication time calculator 31 calculates a fabrication time required to fabricate the 3D-fabricated object based on the print data.

The fabricating material amount calculator 32 is implemented by the execution of the program 2010 with the CPU 501 illustrated in FIG. 2 and calculates an amount of the material required to fabricate the 3D-fabricated object based on the print data.

The fabricating pattern selection receiver 33 is implemented by the execution of the program 2010 with the CPU 501 illustrated in FIG. 2. The fabricating pattern selection receiver 33 receives a selection result made by the user between a relocated 3D model data which is converted by the 3D model relocation unit 25 and the 3D model data before the relocation. The fabricating pattern selection receiver 33 serves as a selection receiver.

The fabricating start determination receiver 34 is implemented by the execution of the program 2010 with the CPU 501 illustrated in FIG. 2 and receives whether or not to start fabrication of the 3D model displayed on the display device 508 by the 3D model display unit 23 (command input by the user). The fabricating start determination receiver 34 serves as a fabricating start receiver.

The data processor 29 is implemented by the execution of the program 2010 with the CPU 501, the HDD 505, and HD 504 illustrated in FIG. 2 and stores various types of data in the storage unit 2000 or reads various types of data from the storage unit 2000. Hereinafter, in a case where the information processing apparatus 20 reads or writes various types of data from or to the storage unit 2000, a description of "via the data processor 29" may be omitted.

The lamination fabricating apparatus 70 includes a fabricating unit 71. The fabricating unit 71, in which the various pieces of hardware illustrated in FIGS. 3A and 3B cooperate and discharge the material based on the print data, fabricates the 3D-fabricated object.

FIG. 5A illustrates an example of the generation of the slice data. For the sake of explanatory convenience, one polygon in the 3D space as an example is described. The normal vector n(a, b, c) and the coordinates of vertexes O, P, and Q are provides in the STL. An equation of a plane including the polygon is expressed by the following equation.

$$a(x - Xo) + b(y - Yo) + c(z - Zo) = 0$$

where (Xo, Yo, Zo) represents a point on the polygon, and the coordinates of any one of the vertexes can be used.

To slice the polygon at certain z-coordinate, Z is assigned to z to obtain an equation of a line MN connecting points M and N in FIG. 5A, expressed as follows

$$ax + by = \text{constant}$$

In FIG. 5A, the point M is a side OP at a height Z, the point N is on a side OQ at the height Z. The line MN exists only in the polygon. Accordingly, when the coordinates of the point M and the point N are found, the line MN is obtained. The point M is on a line connecting the vertexes O and P and at the height Z, the point N is on a line connecting the vertexes O and Q and at the height Z. The line MN is the cross-sectional shape when the polygon is sliced.

FIG. 5B illustrates an example of the print data presented in the G code. One line presents one order of the print data. One order can include various types of contents, but the order in regard to the movement of the discharging nozzle 115 is described here. The order beginning with G1 expresses the movement of the discharging nozzle 115 and the supplying of the material. First line means moving the discharging nozzle 115 to the position (X=10, Y=10) at a speed of 600 mm/min. Second line means supplying 5 mm of the fabricating material while moving the discharging nozzle 115 to the position (X=20, Y=10) at the speed of 600 mm/min.

In the example illustrated in FIG 5B, the print data generator 27 makes the order to supply the material to a range starting from the point M to the point N (or in reverse) in the G code.

The G code is widely used in the FDM lamination fabricating apparatus 70. However, any format can be used as long as the print data presents the trajectory of the discharging nozzle 115 (aggression of coordinates of two points), a moving speed, and amount of the supplied material. A lamination fabricating apparatus employing a method other than the FDM uses print data in a corresponding format.

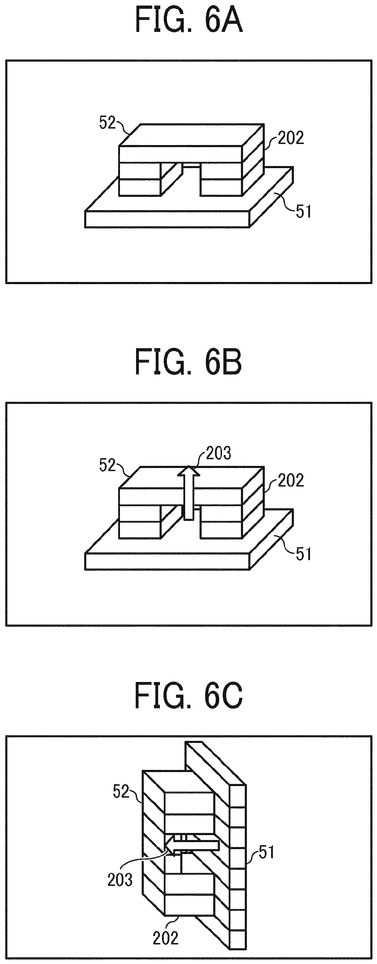

FIGS. 6A, 6B, and 6C illustrate an input of the direction to reinforce the 3D-fabricated object and a rotation of the 3D model. FIG. 6A illustrates an example of the 3D model displayed on the display device 508 by the 3D model display unit 23. The user input the direction to reinforce the 3D-fabricated object against tension while looking at a 3D model 202 on the display device 508.

FIG. 6B illustrates the direction to reinforce the 3D-fabricated object against the tension. The user drags the mouse 512 in a direction 203 in which the 3D-fabricated object is reinforced (hereinafter also "reinforcement direction"), for example. The 3D model 202 illustrated in FIG. 6B includes substrate 51 and a structure 52, which has a hole, fabricated on a substrate 51. The user is supposed to penetrate a string or the like through the hole. For this reason, the user wants to reinforce the 3D-fabricated object against the tension in the direction in which the structure 52 is drawn apart from the substrate 51. Therefore, the user drags the mouse 512 or traces the touch panel with a finger upward on the display device 508 in FIG. 6B.

As the user inputs the direction 203, the 3D model relocation unit 25 converts the 3D model data, so that the direction 203 to reinforce the 3D-fabricated object becomes horizontal. The 3D model 202 (3D-fabricated object) is rotated on the display device 508. FIG. 6C illustrates the 3D model whose direction 203 input by the user becomes horizontal. As the vertical direction on the display device 508 illustrated in FIG. 6C corresponds to the height direction (z-axis direction) of the lamination fabricating apparatus 70, the 3D-fabricated object can be reinforced in the direction 203 input by the user.

Note that, the 3D model displayed on the display device 508 is made by the projection transform, and the coordinate of the 3D model data is associated with a uv coordinate on the display device 508. Accordingly, the point in the uv coordinate touched with the mouse 512 or the finger by the user is converted to the 3D coordinate in the 3D model data.

The user indicates a direction on a two dimensional plane on the display device 508. However, as described above, the uv coordinate is equivalent to the 3D coordinate. Thus, the user can indicate one vector in the 3D space by indicating two points on the display device 508.

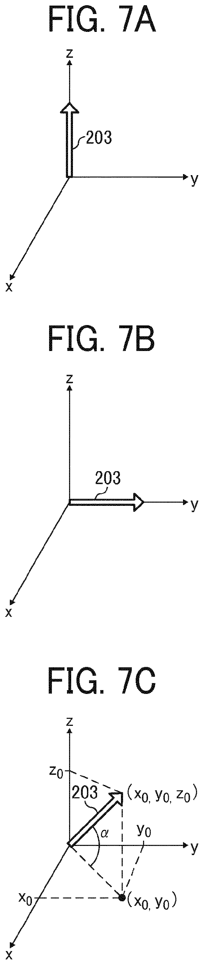

FIGS. 7A, 7B, and 7C illustrate an example of the rotation of the 3D model. FIG. 7A illustrates a case where the user inputs the direction 203 parallel to the z-axis. In order to make this direction 203 horizontal, the direction 203 becomes parallel to an xy-plane. More specifically, the direction 203 is rotated 90 degrees about at least one of the x-axis and the y-axis. FIG. 7B illustrated the direction 203 which is rotated 90 degrees about the x-axis. Alternatively, the direction can be rotated about the y-axis. Yet alternatively, the direction can be rotated 90 degrees about both the x-axis and the y-axis.

In order to convert the 3D model data to make the direction 203 (reinforcement direction) horizontal, for example, the 3D model is rotated by an angle between the xy-plane and the direction 203 input by the user about at least one of the x-axis and the y-axis. Here, the xy-plane, or the horizontal direction, is defined as a predetermined plane to calculate the angle between the direction received by the strength direction receiver 24 and the predetermined plane. As the direction 203 input by the user and the xy-plane form an angle $\alpha$ in FIG. 7C, the 3D model relocation unit 25 converts the 3D model data to rotate the 3D model by the angle $\alpha$ about at least one of the x-axis and the y-axis. In a case where the 3D model data is converted by the angle $\alpha$, the 3D coordinates are converted by the following equations, in which $(x, y, z)$ represents the coordinates before the conversion, $(x', y', z')$ represents the coordinates after the conversion.

$$x' = x$$

$$y' = y\cos\alpha + \sin\alpha$$

$$z' = -y\sin\alpha + z\cos\alpha$$

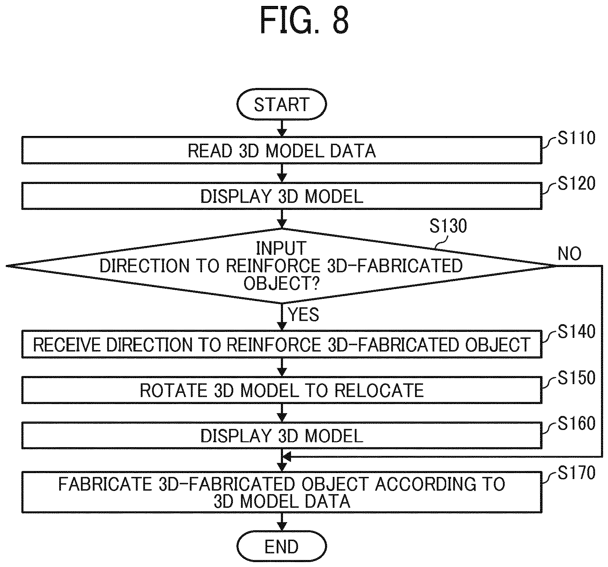

FIG. 8 is a flowchart illustrating an example of a procedure for relocating the 3D model data executed by the information processing apparatus 20.

The 3D model data reading unit 22 reads the 3D model data from the 3D model data memory 2001 (S110).

The 3D model display unit 23 interprets the 3D model data, and displays the 3D model on the display device 508 (S120).

The strength direction receiver 24 judges whether or not the user has input the direction 203 to reinforce the 3D-fabricated object (S130).

This judgment is done by determining whether or not the user pushes a predetermined operation button. Alternatively, the judgment can be done by determining whether the mouse 512 is dragged longer than or equal to a predetermined length. In a case of the touch panel, the judgment is done by determining whether the touch panel is traced with a finger longer than or equal to a predetermined length.

If the judgment in step S130 is "No", the rotation of the 3D model is unnecessary, and the procedure goes to step S170.

If the judgment in step S130 is "Yes", the strength direction receiver 24 receives the direction to reinforce the 3D-fabricated object by the user operation (S140).

The 3D model relocation unit 25 converts the 3D model data to relocate the 3D model data (S150).

The 3D model display unit 23 interprets the 3D model data after the relocation, and displays the 3D model on the display device 508 (S160).

The lamination fabricating apparatus 70 fabricates the 3D-fabricated object (S170). In other words, the print data generator 27 generates the print data, the communication unit 21 sends the print data to the lamination fabricating apparatus 70, and then the fabricating unit 71 of the lamination fabricating apparatus 70 fabricates the 3D-fabricated object.

As described above, the information processing apparatus 20 in the present embodiment converts the 3D model data to make the direction to reinforce the 3D-fabricated object horizontal. Therefore, the information processing apparatus 20 can reinforce the 3D-fabricated object in arbitrary direction.

Modifications of the first embodiment are described below.

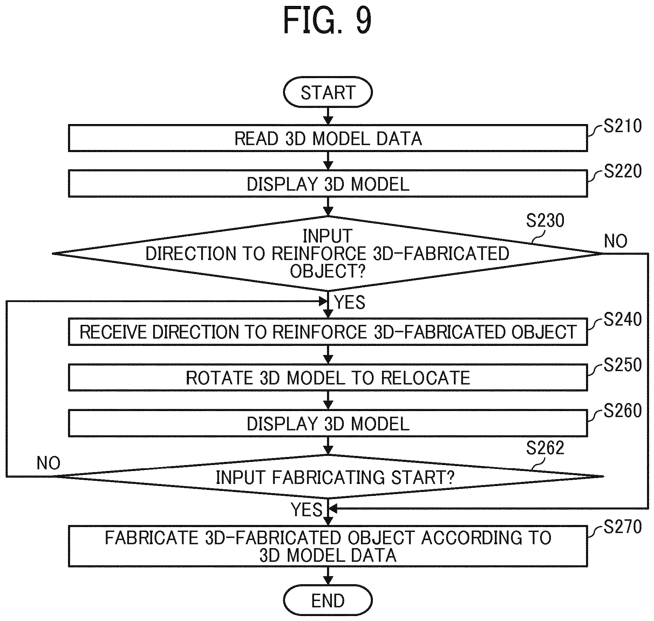

FIG. 9 is a flowchart illustrating an example of a procedure for relocating the 3D model data executed by the information processing apparatus 20 according a first modification. Descriptions are given below of the first modification illustrated in FIG. 9, focusing on the differences from the above-described embodiment illustrated in FIG. 8. Steps from S210 to S260 are similar to steps from S110 to S160 performed in FIG. 8.

As the 3D model display unit 23 displays the 3D model in step S260, the user visually confirms the orientation of the 3D model. The user inputs whether or not to start the fabricating process by the mouse 512 or the keyboard 511.

In step S262, the fabricating start determination receiver 34 judges whether or not the user has input an operation to start the fabricating (S262).

If the user inputs the operation to start the fabricating, the fabricating unit 71 fabricates the 3D-fabricated object in step S270.

If the user does not input the operation to start the fabricating, for example, the user cancels the direction input in step S240 ("No" in step S262), then the procedure goes back to step S240, and the user inputs the direction to reinforce the 3D-fabricated object again.

In accordance with the procedure, the fabricating process starts after the user confirms the direction of the 3D-fabricated object to be reinforced after the rotation according to the direction input by the user. Thus, the desired 3D-fabricated object can be fabricated.

Further, a fabrication time, which the information processing apparatus 20 estimates and displays, makes easier for the user to judge whether or not to start the fabricating process.

As described above, the print data is generated based on the cross-sectional shape obtained by slicing the 3D model (data) horizontally. The fabricating head 110 of the fabricating unit 71 traces the cross-sectional shape of one layer, while discharging the filament, to fabricate the 3D-fabricated object. In the other words, the fabrication time is the sum of moving time for entire trajectory that the fabricating head 110 draws to trace all slice data.

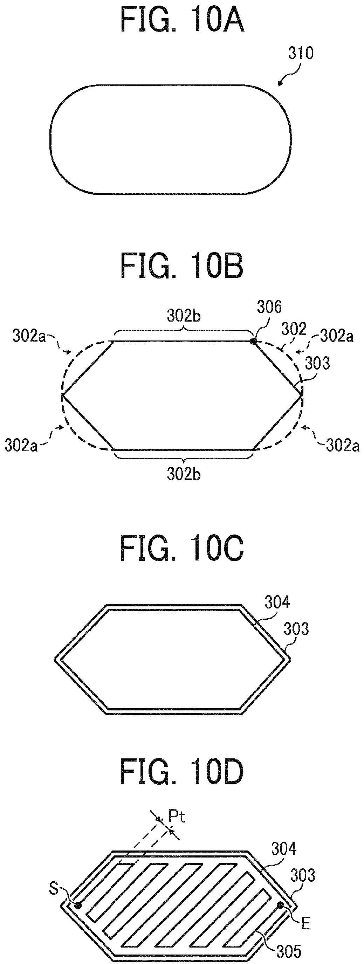

FIGS. 10A, 10B, 10C, and 10D schematically illustrate an example of the generation of the print data to fabricate the 3D-fabricated object based on the slice data. For example, the 3D model data, which has an elliptical shape in the cross-section, is sliced. A curve section of the elliptical shape practically is constructed by a plurality of short lines (polygons).

Based on the slice data 310 of the elliptical shape illustrated in FIG. 10A, the print data generator 27 makes an outline of the discharging nozzle 115, and calculate the trajectory of the discharging nozzle 115 based on the outline. First, the curve section 302a is detected from a cross-section 302 of the slice data. The cross-section 302 of the slice data includes points (aggregation of lines). As Hough transformation or the least squares method is performed for three or more points, a line section can be detected. When one line is not approximated from three or more points, the section including the three or more points is the curve section.

The print data generator 27 approximates a curve section 302a of the cross-section 302 to a line to calculate an outline 303 as illustrated in FIG. 10B for a case where the discharging nozzle 115 is supposed to move straight. The number of the lines to approximate the curve section 302a is set properly. For example, in a case of a fixed length line approximation, the print data generator 27 calculates a distance from a start point 306 of the curve section 302a (end of the line section 302b) to each point of the curve section 302a in ascending order of distance, and approximates the curve section 302a to the line whose distance between the start point 306 of the curve section and the point is the closest to the fixed length. Alternatively, the approximation is carried out, so that an angle between two lines to approximate the curve section 302a is equal to or below a threshold. In this case, the print data generator 27 generates the line from the start point 306 of the curve section 302a to each point of the curve section 302a in ascending order of distance, and calculates the angle between the generated line and the line section 302b (line next to the curve section 302a) The print data generator 27 repeats calculations until the calculated angle exceeds the threshold, and the line with the maximum angle equal to or below the threshold is set to the outline 303. Hereafter, the print data generator 27 evaluates a next line based on the angle with the outline 303 in the similar manner.

As the outline 303 is determined, the print data generator 27 makes the trajectory 304 inside the outline 303, which is approximated by the line, of the slice data as illustrated in FIG. 10C. In consideration of a width of the discharged material, the trajectory 304 is disposed inside the outline 303. An initial value of the width of the discharged material is determined beforehand.

Next, the print data generator 27 makes the trajectory (hereinafter referred to as a fill trajectory 305) to fill inside the trajectory 304. The trajectory 304 and the fill trajectory 305 are trajectory information, which are data of the trajectory on which the discharging nozzle 115 moves. FIG. 10D illustrates the fill trajectory 305 on which the discharging nozzle 115 fills inside the trajectory 304 while reciprocating. The print data generator 27 sets the start point S at a point inward (shifted to a center side of the area enclosed by the trajectory 304) by the width of the material from an edge point of the trajectory 304 such as the leftmost point or the rightmost point of the trajectory 304. The discharging nozzle 115 moves parallel to the trajectory 304 from the start point S. Reaching the point inward by the width of the material from the other line section of the trajectory 304, the discharging nozzle 115 turns and moves parallel to the other line section of the trajectory 304, where the discharging nozzle reached. Moving by a predetermined pitch Pt, the discharging nozzle 115 turns and moves in reverse to the way from the start point S in the reverse direction (parallel to the trajectory 304). The discharging nozzle 115 repeats the movement described above until runout of the space to be filled by the discharged material. As there is no space to be filled in, the movement of the discharging nozzle 115 finishes at an end point E. As the fill trajectory 305 is made traversable as described above, an idle running distance (moving distance of the discharging nozzle 115 without discharging) is minimized. Thus, a laminating time can be reduced.

The trajectory 304 and the fill trajectory 305 illustrated in FIG. 10D are the trajectory of the discharging nozzle 115. As the trajectory 304 and the fill trajectory 305 include a plurality of lines, the trajectory 304 and the fill trajectory 305 are presented in coordinates of two points denoting the line (start point and end point are specified).

The fabrication time calculator 31 divides the trajectory by the moving speed to calculate the moving time of each trajectory. The fabrication time calculator 31 calculates all trajectories in the one layer, and sums up the moving times of all layers to calculate the fabrication time of the entire 3D-fabricated object.

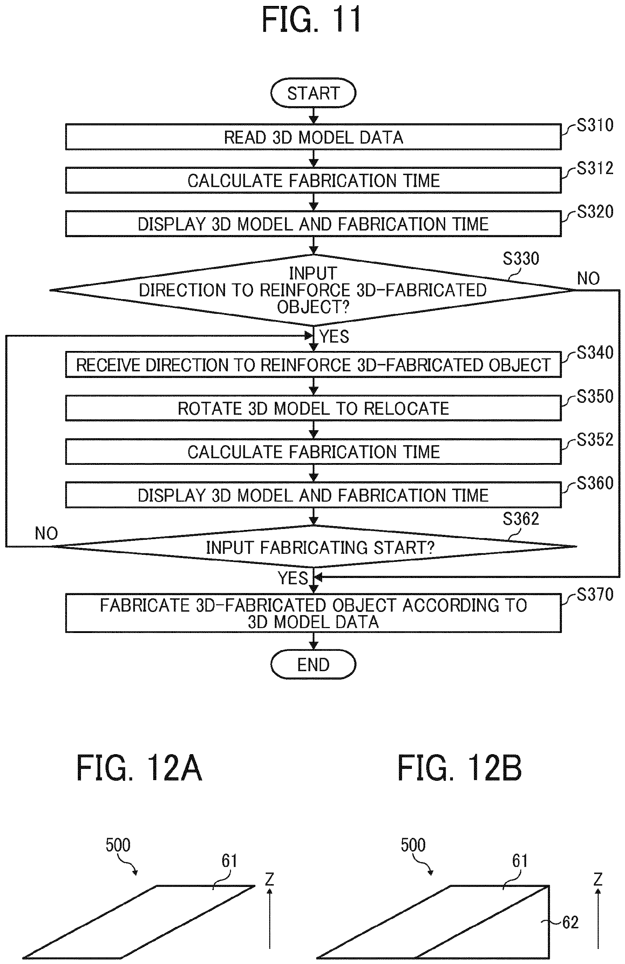

FIG. 11 is a flowchart illustrating an example of a procedure for relocating the 3D model data executed by the information processing apparatus 20 according to a second modification. Descriptions are given below of the second modification illustrated in FIG. 11, focusing on the differences from the above-described first modification illustrated in FIG. 9

Step S310 is similar to step S210 performed in FIG. 9.

In step S312, the fabrication time calculator 31 calculates the fabrication time of one 3D-fabricated object (S312).

The 3D model display unit 23 displays the 3D model and the fabrication time on the display device 508 (S320).

Steps from S330 to S350 are similar to steps from S230 to S250 performed in FIG. 9. The fabrication time calculator 31 calculates the fabrication time of the one 3D-fabricated object (S352). That is, the fabrication time after the relocation is calculated. Then the 3D model display unit 23 displays the 3D model and the fabrication time on the display device 508 (S360). Therefore, the user can judge whether or not to start the fabricating process in consideration of the fabrication time.

In step S362, the fabricating start determination receiver 34 judges whether or not the user has input an operation to start the fabricating (S362).

If the user inputs the operation to start the fabricating, the fabricating unit 71 fabricates the 3D-fabricated object in step S370.

In accordance with these procedures, the fabricating process starts after the user confirms the rotated 3D model and the fabrication time after the rotation according to the direction to reinforce the 3D-fabricated object input by the user. Thus, the desired 3D-fabricated object can be fabricated.

Further, the amount of the fabricating material, which the information processing apparatus 20 estimates and displays, makes easier for the user to judge whether or not to start the fabricating process. A volume of the one 3D-fabricated object is constant, but the amount of the fabricating material may be different according to the fabricating direction by the lamination fabricating apparatus 70. This is because, as described below, when the 3D-fabricated object has an overhang structure (slope is greater than or equal to the perpendicular), under which is a hollow without a 3D structure, the lamination fabricating apparatus 70 fabricates a support 62 under an overhang 61.

FIGS. 12A and 12B illustrate the overhang 61 and the support 62 of a 3D model. FIG. 12A is a side view of the overhang 61 of the 3D model 500. To laminate the overhang 61 in the air is difficult. Therefore, the support 62 is fabricated in advance of the overhang 61 as illustrated in FIG 12B. As the support 62 is unnecessary for the user, the support 62 is removed after the completion of the fabricating. However, the fabricating material for support 62 is consumed.

The fabricating material amount calculator 32 calculates the volume of each solid object including the support 62, and calculates the amount of the fabricating material. As the amount of the fabricating material is roughly proportional to the volume, the amount of the fabricating material can be estimated according to the volume.

There are various types of calculation methods for the volume of the 3D model. For example, one vertex is added besides an arbitrary original point in the 3D space, and a volume of a tetrahedron formed by each polygon and the original point is calculated to calculate the volume of the 3D model. Alternatively, the 3D model is presented in the aggregation of triangular pyramids. An arbitrary point (vertex) is generated in the 3D model to generate the triangular pyramid formed by the arbitrary point and the triangle. If the triangular pyramid is not made with the arbitrary point (the triangular pyramid runs off the 3D model), another arbitrary point is generated. The fabricating material amount calculator 32 repeats the procedure to make the triangular pyramids until the space of the 3D model is filled with the triangular pyramids. Thus, the 3D model is presented in the aggregation of the triangular pyramids. As the volume of one triangular pyramid is calculated by the area of the base and the height thereof, the sum of the volumes of the triangular pyramids is the volume of the 3D model.

In regard to the volume of support 62, the location where the support 62 is needed is determined. For each face of the 3D model, the fabricating material amount calculator 32 determines whether a space exists under the face and whether the angle of the face is greater than or equal to 45 degrees, for example (support is unnecessary when the angle of the face is small). Then the fabricating material amount calculator 32 specifies the face that needs the support 62. The space under the specified face is the volume of the support 62.

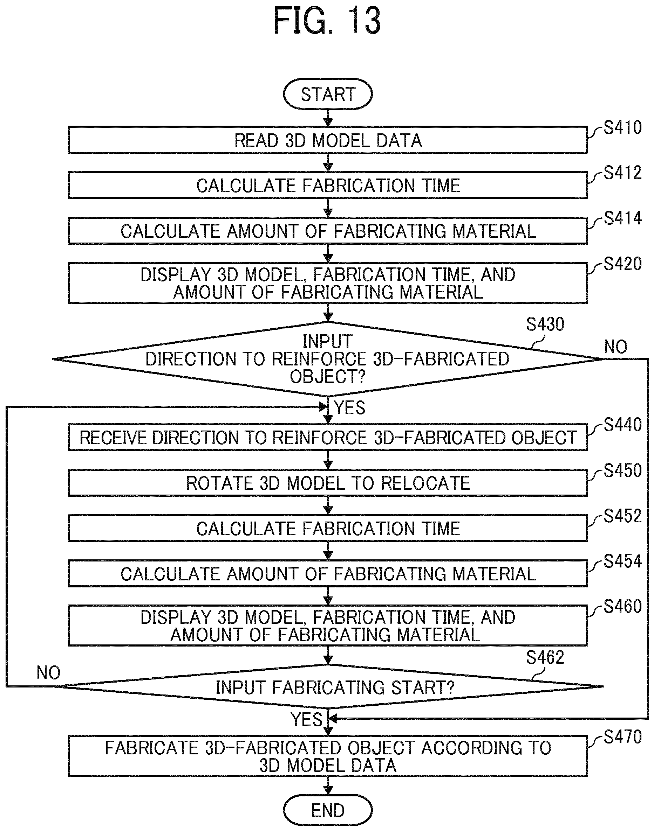

FIG. 13 is a flowchart illustrating an example of a procedure for relocating the 3D model data executed by the information processing apparatus 20 according to a third modification. Descriptions are given below of the third modification illustrated in FIG. 13, focusing on the differences from the above-described second modification illustrated in FIG. 11

Step S410 is similar to step S310 performed in FIG. 11.

In step S414, the fabricating material amount calculator 32 calculates the amount of the fabricating material of one 3D-fabricated object (S414).

The 3D model display unit 23 displays the 3D model to be fabricated, the fabrication time, and the amount of the fabricating material on the display device 508 (S420).

Steps from S430 to S452 are similar to steps from S330 to S352 performed in FIG. 11. Next, the fabricating material amount calculator 32 calculates the amount of the fabricating material of the one 3D-fabricated object (S454). That is, the amount of fabricating material after the relocation is calculated.

The 3D model display unit 23 displays the 3D model to be fabricated, the fabrication time, and the amount of the fabricating material on the display device 508 (S460). Therefore, the user can judge whether the fabricating process starts or not in consideration of the amount of the fabricating material.

In step S462, the fabricating start determination receiver 34 judges whether or not the user has input an operation to start the fabricating (S462).

If the user inputs the operation to start the fabricating, the fabricating unit 71 fabricates the 3D-fabricated object in step S470.

In accordance with these procedures, the fabricating process starts after the user confirms the rotated 3D model, the fabrication time, and the amount of the fabricating material after the rotation according to the direction to reinforce the 3D-fabricated object input by the user. Thus, the desired 3D-fabricated object can be fabricated.

Further, the comparison of the fabrication time or the amount of fabricating material, which the information processing apparatus 20 estimates and displays, makes easier for the user to set the fabricating direction of the 3D model.

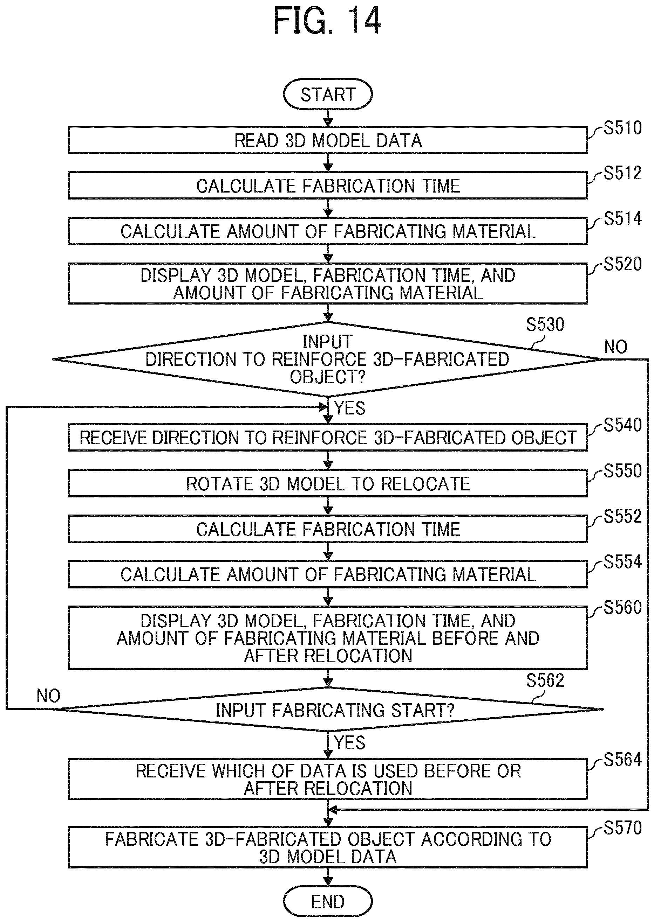

FIG. 14 is a flowchart illustrating an example of a procedure for relocating the 3D model data executed by the information processing apparatus 20 according to a fourth modification. Descriptions are given below of the fourth modification illustrated in FIG. 14, focusing on the differences from the above-described third modification illustrated in FIG. 13 Steps from S510 to S554 are similar to steps from S410 to S454 performed in FIG. 13.

In step S560, the 3D model display unit 23 displays the 3D model, the fabrication time, and the amount of the fabricating material before the input of the direction by the user to reinforce the 3D-fabricated object on the display device 508. And the 3D model display unit 23 displays the 3D model, the fabrication time, and the amount of the fabricating material after the relocation on the display device 508 as well (S560).

In step S562, the fabricating start determination receiver 34 judges whether or not the user has input an operation to start the fabricating (S562).

The user can select one of the reinforcement direction before the relocation and that after the relocation (S564). The fabricating pattern selection receiver 33 receives the selection result by the user.

If the user selects the 3D model data to be used, the fabricating unit 71 fabricates the 3D-fabricated object in step S570.

In accordance with these procedures, the user can determine easily whether to relocate or not in order to reinforce the 3D-fabricated object from the strength before being rotated in consideration of the fabrication time or the amount of fabricating material.

In a second embodiment described below, the user can input, to the information processing apparatus 20, a plurality of directions to reinforce the 3D-fabricated object.

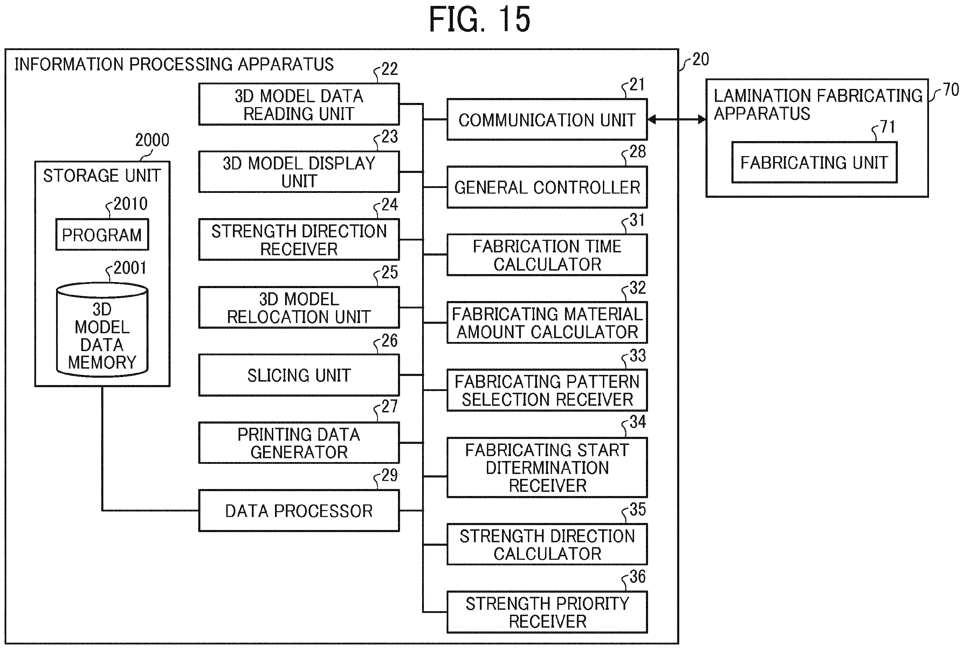

FIG. 15 is a schematic block diagram illustrating a functional configuration of the fabricating system 1 including the information processing apparatus 20 and the lamination fabricating apparatus 70. For the following embodiment, as components appended with the same reference codes perform the same function, the description thereof may be omitted or may be given focusing on the differences.

The information processing apparatus 20 illustrated in FIG. 15 includes a strength direction calculator 35 and a strength priority receiver 36. The strength direction calculator 35 serves as a direction calculator, and the strength priority receiver 36 serves as a priority receiver. The strength direction receiver 24 in the second embodiment is functionally different from the strength direction receiver 24 in the first embodiment. The strength direction receiver 24 in the second embodiment receives a plurality of points and a plurality of force directions to reinforce the 3D-fabricated object.

When the strength direction receiver 24 receives a plurality of points (i.e., reinforced points) and a plurality of directions to reinforce the 3D-fabricated object, the strength direction calculator 35 combines a plurality of force direction into one resultant force direction as the direction to reinforce the 3D-fabricated object.

When the strength direction receiver 24 receives a plurality of reinforced points and the directions in which each of the reinforced points is to be reinforced, the strength priority receiver 36 receives priority of each point and the direction.

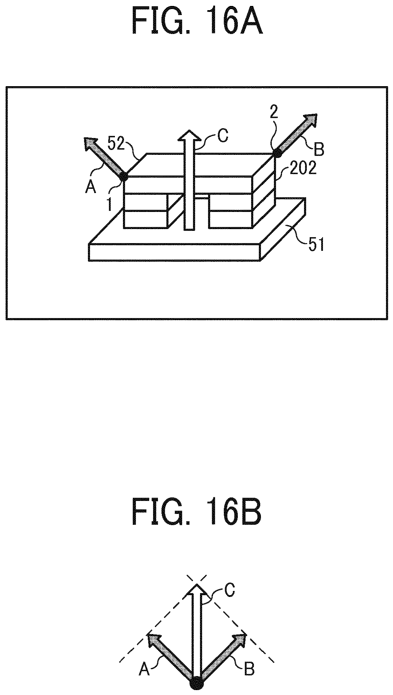

FIGS. 16A and 16B illustrate a plurality of strength directions to reinforce the 3D-fabricated object received by the strength direction receiver 24. The user inputs the two points and the two directions of the 3D model to reinforce the 3D-fabricated object as illustrated in FIG. 16A. The direction A represents the force direction at the point 1 and the direction B represents the force direction at the point 2. The direction A and the direction B are different from each other. As the 3D-fabricated object as a whole can be reinforced in one direction, the information processing apparatus 20 determines the direction to reinforce the entire 3D-fabricated object.

Therefore, the strength direction calculator 35 defines the middle direction between the direction A and the direction B as the direction to reinforce the entire 3D-fabricated object. More specifically, the direction A and the direction B are vectorized into 3D vectors and combined into one resultant force. To combine the vectors is to sum up x components, y components, and z components of the vectors respectively. Here, xa, ya, and za represent the x component, the y component, and the z component of the vector of the direction A respectively. Moreover, xb, yb, and zb represent the x component, the y component, and the z component of the vector of the direction B respectively. A combined vector of a direction C is expressed as the following equation. Here, xc, yc, and zc represent the x component, the y component, and the z component of the vector of the direction C respectively.

$$(xc, yc, zc) = (xa+xb, ya+yb, za+zb)$$

As illustrated in FIG. 16B, the direction C is obtained by the composition of vectors of the direction A and the direction B. In FIG. 16C, the direction C is an upward, vertical direction (z direction). A case where the strengths required by the user are different for the direction A and the direction B is described later. Although the two directions are combined in FIGS. 16A and 16B, three or more directions can be combined in a similar manner.
When a plurality of the points is to be reinforced in same direction, an entire face including the plurality of the points of the 3D-fabricated object is to be reinforced.
When the resultant vector combined from a plurality of the vectors is zero vector, the direction to reinforce the entire 3D-fabricated object is a direction that is rotated 90 degrees from an arbitrary vector.

The arbitrary vector is determined in a manner described below, for example. The strength direction receiver 24 defines the direction to reinforce the 3D-fabricated object input at first as the arbitrary vector. Alternatively, the strength direction receiver 24 can define the direction selected by the user as the arbitrary vector.

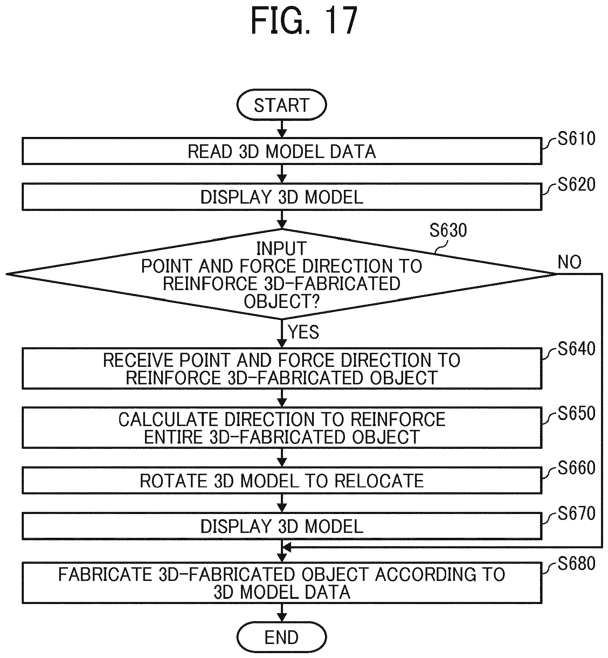

FIG. 17 is a flowchart illustrating an example of a procedure for relocating the 3D model data executed by the information processing apparatus 20.

The 3D model data reading unit 22 reads the 3D model data from the 3D model data memory 2001 (S610).

The 3D model display unit 23 interprets the 3D model data, and displays the 3D model on the display device 508 (S620).

The strength direction receiver 24 judges whether or not the user inputs a plurality of points and a plurality of directions to reinforce the 3D-fabricated object (S630). This judgment is done by determining whether the user pushes the predetermined operation button or not. Alternatively, the judgment can be done by whether the mouse 512 is dragged longer than or equal to the predetermined length. In a case of the touch panel, the judgment is done by whether the touch panel is traced with a finger longer than or equal to the predetermined length.

If the judgment in step S630 is "No", the rotation of the 3D model is unnecessary, and the procedure goes to step S680.

If the judgment in step S630 is "Yes", the strength direction receiver 24 receives the plurality of points and the plurality of directions to reinforce the 3D-fabricated object by the user operation (S640).

The strength direction calculator 35 combines the plurality of directions to calculate a direction to reinforce the entire 3D-fabricated object (S650).

The 3D model relocation unit 25 converts the 3D model data to relocate the 3D model data (S660).

The 3D model display unit 23 interprets the 3D model data after the relocation, and displays the 3D model on the display device 508 (S670).

The lamination fabricating apparatus 70 fabricates the 3D-fabricated object (S680). In other words, the print data generator 27 generates the print data, the communication unit 21 sends the print data to the lamination fabricating apparatus 70, and then the fabricating unit 71 of the lamination fabricating apparatus 70 fabricates the 3D-fabricated object.

As described above, even though there is the plurality of the direction to reinforce the 3D-fabricated object, the information processing apparatus 20 in the present embodiment combines the plurality of the directions, and can reinforce the 3D model in appropriate direction.

Modifications of the second embodiment are described below.

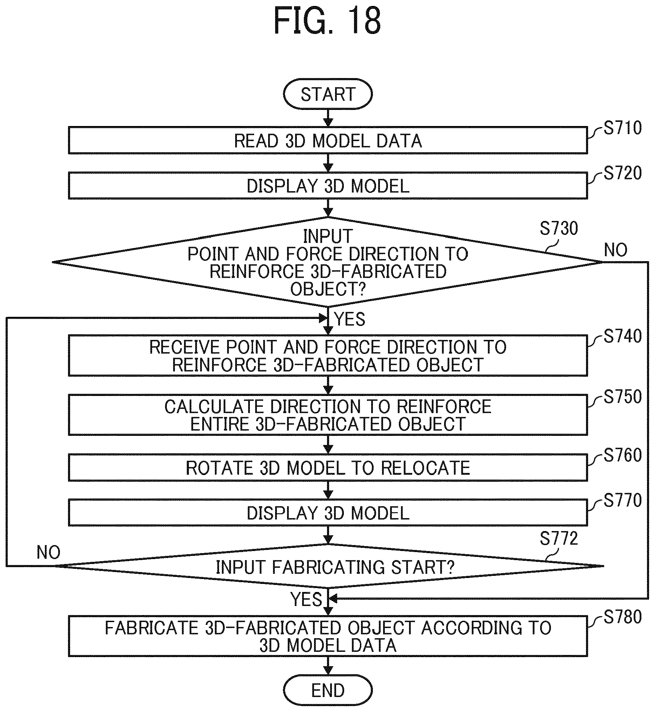

FIG. 18 is a flowchart illustrating an example of a procedure for relocating the 3D model data executed by the information processing apparatus 20 according to a first modification of the second embodiment. Descriptions are given below of the first modification illustrated in FIG. 18, focusing on the differences from the above-mentioned second embodiment illustrated in FIG. 17. Steps from S710 to S770 are similar to steps from S610 to S670 illustrated in FIG. 17.

As the 3D model display unit 23 displays the 3D model in step S770, the user visually confirms the orientation of the 3D model. The user inputs whether the fabricating process starts or not by the mouse 512 or the keyboard 511.

In step S772, The fabricating start determination receiver 34 judges whether the user inputs the operation to start the fabricating or not (S772).

If the user inputs the operation to start the fabricating, the fabricating unit 71 fabricates the 3D-fabricated object in step S780.

If the user does not input the operation to start the fabricating, for example, the user cancels the direction input in step S740 ("No" in step S772), then the procedure goes back to step S740, and the user inputs the direction to reinforce the 3D-fabricated object again.

In accordance with these procedures, the fabricating process starts after the user confirms the rotated 3D model after the rotation according to the direction to reinforce the 3D-fabricated object input by the user. Thus, the desired 3D-fabricated object can be fabricated.

There is a case where the user determines the priority among the plurality of the directions. In other words, a certain direction is given priority over other direction. In this case, the user can input the priority for the directions in a second modification.

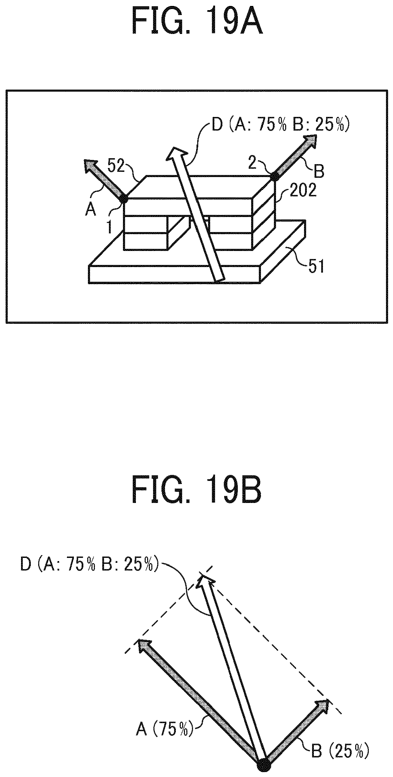

FIGS. 19A and 19B illustrate an example of the input of the priority of the direction. There are two user inputs of the point and the direction to reinforce the 3D-fabricated object as illustrated in FIG. 19A. The direction A represents the direction at the point 1 and the direction B represents the direction at the point 2. The user can give the priorities (weighting) to the direction A and direction B respectively. The strength priority receiver 36 displays an entry field as many as the number of directions the user inputs on the display device 508, for example. An initial value of the priority is the same. For example, in a case of the two directions, the priority of the direction A is 50%, the priority of the direction B is 50%.

As the user inputs the priority of the direction A or the direction B, the strength priority receiver 36 increases or decreases the priority of the other direction so that the sum of the priorities is 100%. Thus, the sum of the priority is kept 100%.

For example, in FIGS. 19A and 19B, the priority of the direction A is 75%, and the priority of the direction B is 25%. In this case, the strength direction calculator 35 vectorizes the direction A and the direction B into the 3D vectors, multiplies the vectors by the ratio of the priority, and combines the multiplied vectors into one resultant vector. In other words, each component of the 3D vector of the direction A is multiplied by 0.75, each component of the 3D vector of the direction B is multiplied by 0.25, and the multiplied components are added up according to the component. Thus, the 3D vector of the direction D is obtained.

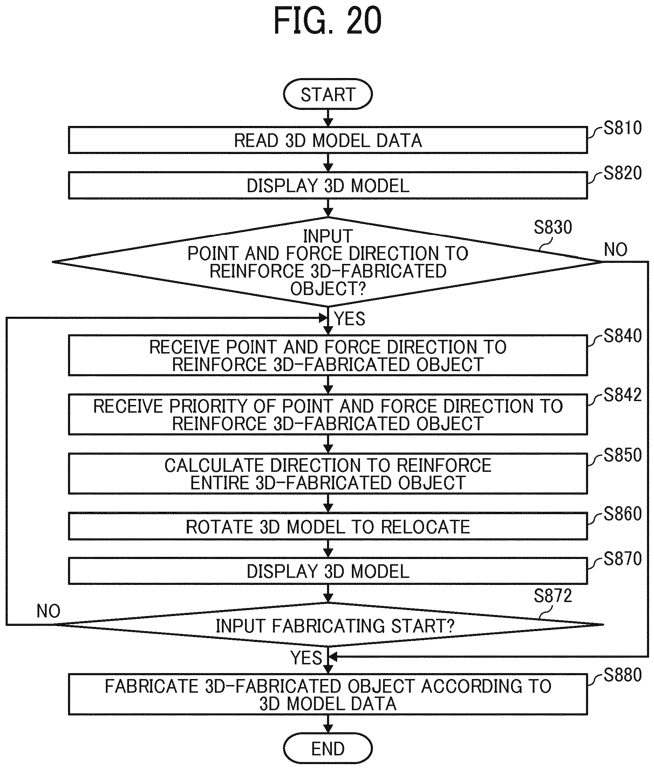

FIG. 20 is a flowchart illustrating an example of a procedure for relocating the 3D model data executed by the information processing apparatus 20 according to the second modification. Descriptions are given below of the second modification illustrated in FIG. 20, focusing on the differences from the above-described first modification illustrated in FIG. 18.

Steps from S810 to S840 are similar to steps from S710 to S740 illustrated in FIG. 18. Next, the strength priority receiver 36 receives the priority to reinforce the 3D-fabricated object (S842).

In step S850, the strength direction calculator 35 calculates the direction to reinforce the 3D-fabricated object based on the priority (S850). Steps from S860 to S880 are similar to steps from S760 to S780 illustrated in FIG. 18.

In accordance with these procedures, if there are a plurality of points and a plurality of directions, the user can set the ratio of the strength.

Further, a fabrication time, which the information processing apparatus 20 estimates and displays, makes easier for the user to judge whether or not to start the fabricating process. The method of the calculation of the fabrication time is described in the above-mentioned first embodiment.

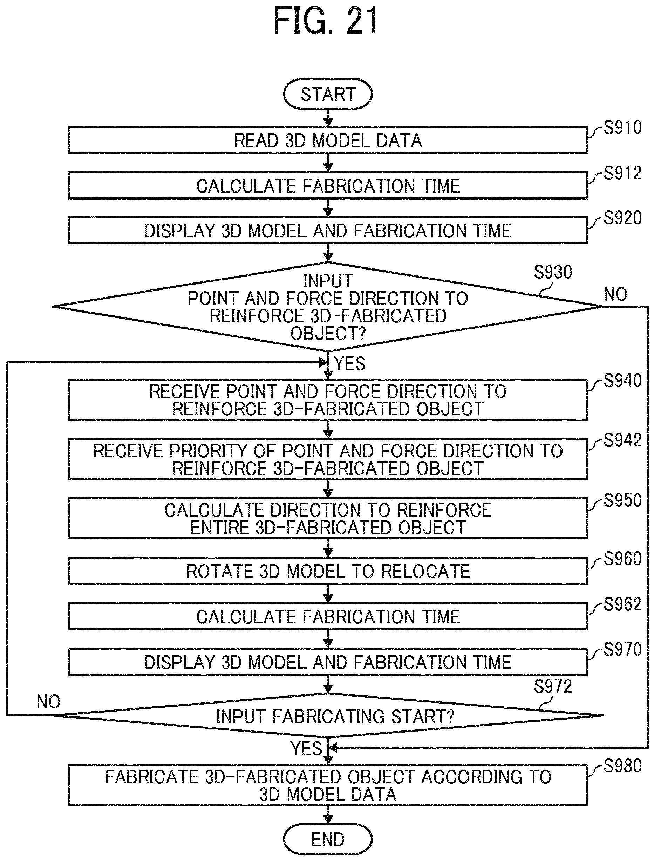

FIG. 21 is a flowchart illustrating an example of a procedure for relocating the 3D model data executed by the information processing apparatus 20 according to a third modification. Descriptions are given below of the third modification illustrated in FIG. 21, focusing on the differences from the above-described second modification illustrated in FIG. 20.

Step S910 is similar to step S810 illustrated in FIG. 20.

In step S912, the fabrication time calculator 31 calculates the fabrication time of one 3D-fabricated object (S912).

The 3D model display unit 23 displays the 3D model and the fabrication time on the display device 508 (S920).

Steps from S930 to S960 are similar to steps from S830 to S860 illustrated in FIG. 20. The fabrication time calculator 31 calculates the fabrication time of the one 3D-fabricated object (S962). That is, the fabrication time after the relocation is calculated.

The 3D model display unit 23 displays the 3D model and the fabrication time on the display device 508 (S970). Therefore, the user can judge whether the fabricating process starts or not in consideration of the fabrication time.

In step S972, the fabricating start determination receiver 34 judges whether or not the user has input an operation to start the fabricating (S972).

If the user inputs the operation to start the fabricating, the fabricating unit 71 fabricates the 3D-fabricated object in step S980.

In accordance with these procedures, the fabricating process starts after the user confirms the rotated 3D model and the fabrication time after the rotation according to the direction to reinforce the 3D-fabricated object by the user. Thus, the desired 3D model can be fabricated.

Further, the amount of the fabricating material, which the information processing apparatus 20 estimates and displays, makes easier for the user to judge whether or not to start the fabricating process. A volume of the one 3D-fabricated object is constant, but the amount of the fabricating material may be different according to the fabricating direction by the lamination fabricating apparatus 70. The overhang is described in the above-mentioned first embodiment.

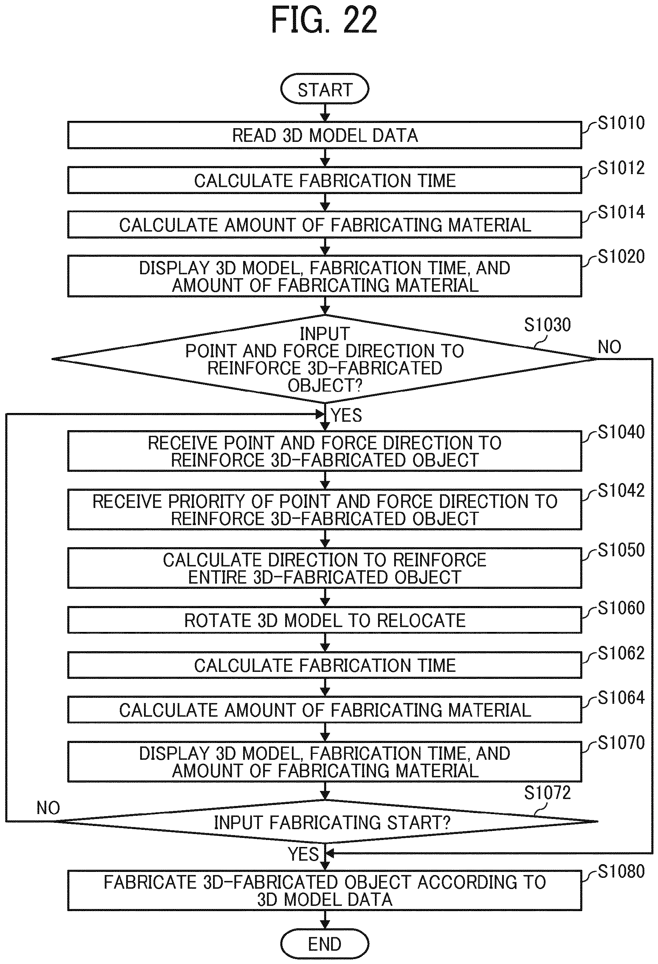

FIG. 22 is a flowchart illustrating an example of a procedure for relocating the 3D model data executed by the information processing apparatus 20 according to a fourth modification. Descriptions are given below of the fourth modification illustrated in FIG. 22, focusing on the differences from the above-described third modification illustrated in FIG. 21.

Step S1010 is similar to step S910 illustrated in FIG. 21.

In step S1014, the fabricating material amount calculator 32 calculates the amount of the fabricating material of the one 3D-fabricated object (S1014).

The 3D model display unit 23 displays the 3D model to be fabricated, the fabrication time, and the amount of the fabricating material on the display device 508 (S1020).

Steps from S1030 to S1062 are similar to steps from S930 to S962 illustrated in FIG. 21. Next, the fabricating material amount calculator 32 calculates the amount of the fabricating material of the one 3D-fabricated object (S1064). That is, the amount of fabricating material after the relocation is calculated.

The 3D model display unit 23 displays the 3D model to be fabricated, the fabrication time, and the amount of the fabricating material on the display device 508 (S1070). Therefore, the user can judge whether or not to start the fabricating process in consideration of the amount of the fabricating material.

In step S1072, the fabricating start determination receiver 34 judges whether or not the user has input an operation to start the fabricating (S1072).

If the user inputs the operation to start the fabricating, the fabricating unit 71 fabricates the 3D-fabricated object in step S1080.

In accordance with these procedures, the fabricating process starts after the user confirms the rotated 3D model, the fabrication time, and the amount of the fabricating material after the rotation according to the direction to reinforce the 3D-fabricated object by the user. Thus, the desired 3D-fabricated object can be fabricated.

Further, the comparison of the fabrication time or the amount of fabricating material, which the information processing apparatus 20 estimates and displays, makes easier for the user to set the fabricating direction of the 3D model.

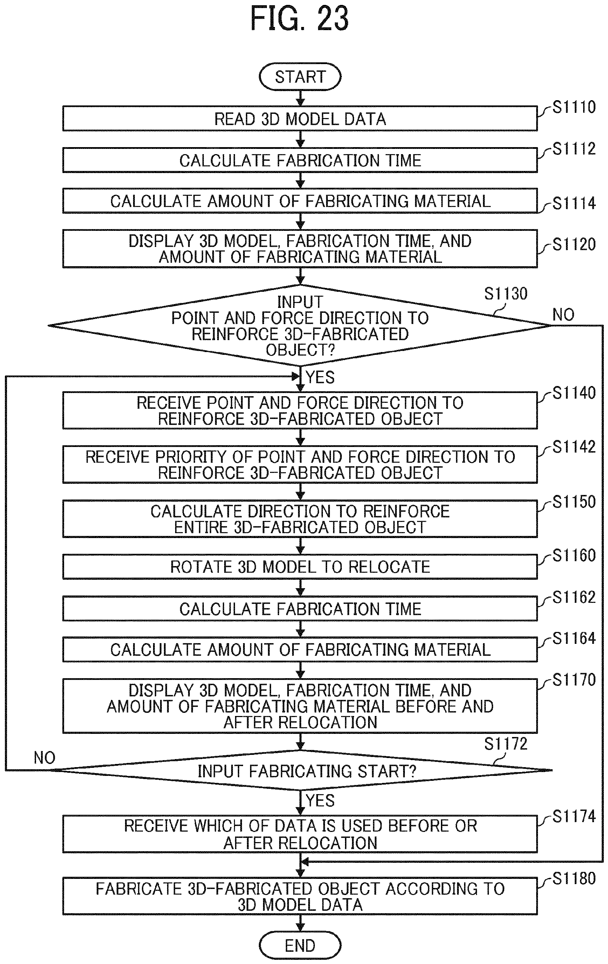

FIG. 23 is a flowchart illustrating an example of a procedure for relocating the 3D model data executed by the information processing apparatus 20 according to a fifth modification. Descriptions are given below of the fifth modification illustrated in FIG. 23, focusing on the differences from the above-described fourth modification illustrated in FIG. 22. Steps from S1110 to S1164 are similar to steps from S1010 to S1064 illustrated in FIG. 22.

In step S1170, the 3D model display unit 23 displays the 3D model, the fabrication time, and the amount of the fabricating material before the input of the direction by the user to reinforce the 3D-fabricated object on the display device 508. And the 3D model display unit 23 displays the 3D model, the fabrication time, and the amount of the fabricating material after the relocation on the display device 508 as well (S1170).

In step S1072, the fabricating start determination receiver 34 judges whether or not the user has input an operation to start the fabricating (S1072).

The user can select the 3D model data to be used from the 3D model data before the relocation and that after the relocation (S1174). The fabricating pattern selection receiver 33 receives the selection result by the user.

If the user selects the 3D model data to be used, the fabricating unit 71 fabricates the 3D-fabricated object in step S1080.

In accordance with these procedures, the user can determine easily whether to relocate or not in order to reinforce the 3D-fabricated object in consideration of the fabrication time or the amount of fabricating material.

Note that the embodiments described above are preferred example embodiments of the present disclosure, and the present disclosure is not limited to the details of the example. Modifications and alterations of the embodiments can be made within the scope of the appended claims.

In the present embodiment, the fluent material such as the resin or the metal is mainly used for the material, but lamination fabricating apparatus 70 can discharges cells of humans, animals, or plants to make the 3D-fabricated object. For example, some kind of organ or cell sheet can be made from the cells.

The embodiments described above concern reinforcing the 3D-fabricated object against tension, but the relocation can be conducted to reinforce the 3D-fabricated object against compression force or shearing force.

In the example configurations such as the configuration illustrated in FIG. 4, the functions of the information processing apparatus 20 is divided according to the main functions to facilitate the comprehension of the processing of the information processing apparatus 20. The disclosure is not limited according to the way of dividing the processing unit or the names thereof. The processing of the information processing apparatus 20 may be divided into more pieces of processing according to the processing details. The processing of the information processing apparatus 20 may be divided so that one processing unit may include a number of processing.

The lamination fabricating apparatus 70 may include a part of function of the information processing apparatus 20. The 3D model display unit 23 is an example of means for displaying. The display device 508 is the example of the display device. The strength direction receiver 24 is the example of the means for receiving the direction. The 3D model relocation unit 25 is the example of the means for rotating. The strength direction calculator 35 is the example of the means for calculating the direction. The strength priority receiver 36 is the example of the means for receiving the priority. The fabricating start determination receiver 34 is the example of the means for receiving the fabricating start. The fabrication time calculator 31 is the example of the means for calculating the fabrication time. The fabricating material amount calculator 32 is the example of the means for calculating the amount of the fabricating material. The fabricating pattern selection receiver 33 is the example of the means for receiving the selection result.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

**Claims**

1. An information processing apparatus (20) configured to send fabrication data generated from shape data stored in a memory (2001) to a lamination fabricating apparatus (70) that laminates a material to fabricate a 3D object, wherein the fabrication data is information interpreted by the lamination fabrication apparatus (70) to fabricate the 3D object and the shape data is data representing a shape of the 3D object to be fabricated, the information processing apparatus (20) comprising:

   a display unit (23) configured to display, on a display device (508), the shape data of the 3D object to be fabricated;
   a direction receiver (24) configured to receive an input indicating a direction in which to reinforce the 3D object;
   a relocation unit (25) configured to convert the shape data to reinforce the 3D object in the direction received by the direction receiver (24) by calculating a rotation angle, the rotation angle being the angle between the received direction and a horizontal plane of the lamination fabricating apparatus, and rotating the shape data by the calculated rotation angle; and
   a printing data generator (27) for generating the fabrication data from the rotated shape data.

2. The information processing apparatus (20) according to claim 1,
   wherein the relocation unit (25) converts the shape data to rotate the shape by the rotation angle.

3. The information processing apparatus (20) according to claim 1,
   further comprising a direction calculator (35) configured to calculate one direction based on a plurality of directions received by the direction receiver (24),
   wherein the relocation unit (25) calculates the rotation angle based on the one direction.

4. The information processing apparatus (20) according to claim 3, further comprising a priority receiver (36),
   wherein the direction receiver (24) receives a plurality of directions,
   wherein the priority receiver (36) receives a plurality of priorities of the plurality of directions, and
   wherein the direction calculator (35) calculates one direction based on the plurality of directions weighted by the plurality of priorities.

**5.** The information processing apparatus (20) according to any one of claims 1 to 4, further comprising a fabricating start receiver (34) configured to receive a command to start fabricating according to the shape data converted by the relocation unit (25).

**6.** The information processing apparatus (20) according to any one of claims 1 to 5, further comprising a fabrication time calculator (31) configured to calculate a fabrication time for the lamination fabricating apparatus (70) to fabricate the 3D object according to the shape data, wherein the display unit (23) displays the fabrication time on the display device (508).

**7.** The information processing apparatus (20) according to claim 6, further comprising a fabricating material amount calculator (32) configured to calculate an amount of a fabricating material for the lamination fabricating apparatus (70) to fabricate the 3D object according to the shape data, wherein the display unit (23) displays the amount of the fabricating material on the display device (508).

**8.** The information processing apparatus (20) according to claim 7, further comprising a selection receiver (33) to receive a selection result indicating which of the shape data before rotation and the shape data after rotation by the relocation unit (25) is used to fabricate the 3D object by the lamination fabricating apparatus (70) according to the shape data, wherein the display unit (23) displays at least one of the fabrication time and the amount of the fabricating material before the rotation by the relocation unit (25) and displays at least one of the fabrication time and the amount of the fabricating material after the rotation by the relocation unit (25) on the display device (508).

**9.** A fabricating system (1) comprising:

the information processing apparatus (20) according to any one of claims 1 to 8; and the lamination fabricating apparatus (70).

**10.** A method for generating fabrication data to fabricate a 3D-fabricated object, the method comprising:

sending, from an information processing apparatus (20) to a lamination fabricating apparatus (70) that laminates a material to fabricate a 3D object, fabrication data generated from shape data stored in a memory (2001), wherein the fabrication data is information interpreted by the lamination fabrication apparatus (70) to fabricate the 3D object and the shape data is data representing a shape of the 3D object to be fabricated;

displaying, on a display device (508), the shape data of the 3D object to be fabricated; receiving an input indicating a direction in which to reinforce the 3D object; calculating a rotation angle, the rotation angle being the angle between the received direction and a horizontal plane of the lamination fabricating apparatus; rotating the shape data of the 3D object to be fabricated to reinforce the 3D object in the received direction; and generating the fabrication data from the rotated shape data.

**11.** A carrier means carrying computer readable code for controlling a computer to carry out the method according to claim 10.

**Patentansprüche**

**1.** Informationsverarbeitungsgerät (20), das konfiguriert ist, um Herstellungsdaten, die aus in einem Speicher (2001) gespeicherten Formdaten erzeugt werden, an ein Laminierungsherstellungsgerät (70) zu senden, das ein Material laminiert, um ein 3D-Objekt herzustellen, wobei die Herstellungsdaten Informationen sind, die von dem Laminierungsherstellungsgerät (70) interpretiert werden, um das 3D-Objekt herzustellen, und die Formdaten Daten sind, die eine Form des herzustellenden 3D-Objekts repräsentieren, das Informationsverarbeitungsgerät (20) umfassend:

eine Anzeigeeinheit (23), die konfiguriert ist, um die Formdaten des herzustellenden 3D-Objekts auf einer Anzeigevorrichtung (508) anzuzeigen; einen Richtungsempfänger (24), der konfiguriert ist, um eine Eingabe zu empfangen, die eine Richtung angibt, in der das 3D-Objekt zu verstärken ist; eine Umlagerungseinheit (25), die konfiguriert ist, um die Formdaten zum Verstärken des 3D-Objekts in der durch den Richtungsempfänger (24) empfangenen Richtung durch Berechnen eines Drehungswinkels umzuwandeln, wobei der Drehungswinkel der Winkel zwischen der empfangenen Richtung und einer horizontalen Ebene des Laminierungsherstellungsgeräts ist, und die Formdaten um den berechneten Drehungswinkel zu drehen; und eine Druckdaten-Erzeugungsvorrichtung (27) zum Erzeugen der Herstellungsdaten aus den gedrehten Formdaten.

**2.** Informationsverarbeitungsgerät (20) nach Anspruch 1,
wobei die Umlagerungseinheit (25) die Formdaten umwandelt, um die Form um den Drehungswinkel zu drehen.

**3.** Informationsverarbeitungsgerät (20) nach Anspruch 1,
ferner umfassend eine Richtungsberechnungsvorrichtung (35), die konfiguriert ist, um eine Richtung basierend auf einer Vielzahl von durch den Richtungsempfänger (24) empfangenen Richtungen zu berechnen,
wobei die Umlagerungseinheit (25) den Drehungswinkel basierend auf der einen Richtung berechnet.

**4.** Informationsverarbeitungsgerät (20) nach Anspruch 3, ferner umfassend einen Prioritätsempfänger (36),
wobei der Richtungsempfänger (24) eine Vielzahl von Richtungen empfängt,
wobei der Prioritätsempfänger (36) eine Vielzahl von Prioritäten der Vielzahl von Richtungen empfängt, und
wobei die Richtungsberechnungsvorrichtung (35) eine Richtung basierend auf der Vielzahl von Richtungen, gewichtet nach der Vielzahl der Prioritäten, berechnet.

**5.** Informationsverarbeitungsgerät (20) nach einem der Ansprüche 1 bis 4,
ferner umfassend einen Herstellungsstartempfänger (34), der konfiguriert ist, um einen Befehl zum Starten der Herstellung gemäß den durch die Umlagerungseinheit (25) umgewandelten Formdaten zu empfangen.

**6.** Informationsverarbeitungsgerät (20) nach einem der Ansprüche 1 bis 5,
ferner umfassend eine Herstellungszeit-Berechnungsvorrichtung (31), die konfiguriert ist, um eine Herstellungszeit für das Laminierungsherstellungsgerät (70) zum Herstellen des 3D-Objekts gemäß den Formdaten zu berechnen,
wobei die Anzeigeeinheit (23) die Herstellungszeit auf der Anzeigevorrichtung (508) anzeigt.

**7.** Informationsverarbeitungsgerät (20) nach Anspruch 6,
ferner umfassend eine Herstellungsmaterialmengen-Berechnungsvorrichtung (32), die konfiguriert ist, um eine Menge eines Herstellungsmaterials für das Laminierungsherstellungsgerät (70) zum Herstellen des 3D-Objekts gemäß den Formdaten zu berechnen,
wobei die Anzeigeeinheit (23) die Menge des Herstellungsmaterials auf der Anzeigevorrichtung (508) anzeigt.

**8.** Informationsverarbeitungsgerät (20) nach Anspruch 7,
ferner umfassend einen Auswahlempfänger (33) zum Empfangen eines Auswahlergebnisses, das angibt, welche der Formdaten vor dem Drehen und der Formdaten nach dem Drehen durch die Umlagerungseinheit (25) verwendet werden, um das 3D-Objekt durch das Laminierungsherstellungsgerät (70) gemäß den Formdaten herzustellen,
wobei die Anzeigeeinheit (23) auf der Anzeigevorrichtung (508) mindestens eines der Herstellungszeit und der Menge des Herstellungsmaterials vor dem Drehen durch die Umlagerungseinheit (25) anzeigt und mindestens eines der Herstellungszeit und der Menge des Herstellungsmaterials nach dem Drehen durch die Umlagerungseinheit (25) anzeigt.

**9.** Herstellungssystem (1), umfassend:
das Informationsverarbeitungsgerät (20) nach einem der Ansprüche 1 bis 8; und das Laminierungsherstellungsgerät (70).

**10.** Verfahren zum Erzeugen von Herstellungsdaten zum Herstellen eines 3D-hergestellten Objekts, das Verfahren umfassend:

Senden, von einem Informationsverarbeitungsgerät (20) an ein Laminierungsherstellungsgerät (70), das ein Material laminiert, um ein 3D-Objekt herzustellen, von Herstellungsdaten, die aus in einem Speicher (2001) gespeicherten Formdaten erzeugt werden, wobei die Herstellungsdaten Informationen sind, die durch das Laminierungsherstellungsgerät (70) interpretiert werden, um das 3D-Objekt herzustellen, und die Formdaten Daten sind, die eine Form des herzustellenden 3D-Objekts repräsentieren;
Anzeigen, auf einer Anzeigevorrichtung (508), der Formdaten des herzustellenden 3D-Objekts;
Empfangen einer Eingabe, die eine Richtung angibt, in die das 3D-Objekt zu verstärken ist;
Berechnen eines Drehungswinkels, wobei der Drehungswinkel der Winkel zwischen der empfangenen Richtung und einer horizontalen Ebene des Laminierungsherstellungsgeräts ist;
Drehen der Formdaten des herzustellenden 3D-Objekts zum Verstärken des 3D-Objekts in der empfangenen Richtung; und
Erzeugen der Herstellungsdaten aus den gedrehten Formdaten.

**11.** Trägermittel, das einen computerlesbaren Code zum Steuern eines Computers trägt, um das Verfahren nach Anspruch 10 auszuführen.

**Revendications**

1. Appareil de traitement d'informations (20) configuré pour envoyer des données de fabrication générées à partir de données de formes stockées dans une mémoire (2001) vers un appareil de fabrication de laminage (70) qui lamine un matériau pour fabriquer un objet 3D, dans lequel les données de fabrication sont des informations interprétées par l'appareil de fabrication de laminage (70) pour fabriquer l'objet 3D et les données de forme sont des données qui représentent une forme de l'objet 3D à fabriquer, l'appareil de traitement d'informations (20) comprenant :

   une unité d'affichage (23) configurée pour afficher, sur un dispositif d'affichage (508), les données de forme de l'objet 3D à fabriquer, un récepteur de direction (24) configuré pour recevoir une entrée indiquant une direction dans laquelle renforcer l'objet 3D, une unité de transfert (25) configurée pour convertir les données de forme pour renforcer l'objet 3D dans la direction reçue par le récepteur de direction (24) en calculant un angle de rotation, l'angle de rotation étant l'angle entre la direction reçue et un plan horizontal de l'appareil de fabrication de laminage, et en faisant tourner les données de forme selon l'angle de rotation calculé, et un générateur de données d'impression (27) pour générer les données de fabrication à partir des données de forme tournées.

2. Appareil de traitement d'informations (20) selon la revendication 1, dans lequel l'unité de transfert (25) convertit les données de forme pour tourner la forme selon l'angle de rotation.

3. Appareil de traitement d'informations (20) selon la revendication 1, comprenant en outre un calculateur de direction (35) configuré pour calculer une direction sur la base d'une pluralité de directions reçues par le récepteur de direction (24), dans lequel l'unité de transfert (25) calcule l'angle de rotation sur la base de la direction.

4. Appareil de traitement d'informations (20) selon la revendication 3, comprenant en outre un récepteur de priorité (36), dans lequel le récepteur de direction (24) reçoit une pluralité de directions, dans lequel le récepteur de priorité (36) reçoit une pluralité de priorités de la pluralité de directions, et dans lequel le calculateur de direction (35) calcule une direction sur la base de la pluralité de directions pondérées par la pluralité de priorités.

5. Appareil de traitement d'informations (20) selon l'une quelconque des revendications 1 à 4, comprenant en outre un récepteur de démarrage de fabrication (34) configuré pour recevoir une commande pour démarrer une fabrication selon les données de forme converties par l'unité de transfert (25).

6. Appareil de traitement d'informations (20) selon l'une quelconque des revendications 1 à 5, comprenant en outre un calculateur de temps de fabrication (31) configuré pour calculer un temps de fabrication pour l'appareil de fabrication de laminage (70) pour fabriquer l'objet 3D selon les données de forme, dans lequel l'unité d'affichage (23) affiche le temps de fabrication sur le dispositif d'affichage (508).

7. Appareil de traitement d'informations (20) selon la revendication 6, comprenant en outre un calculateur de quantité de matériau de fabrication (32) configuré pour calculer une quantité de matériau de fabrication pour l'appareil de fabrication de laminage (70) pour fabriquer l'objet 3D conformément aux données de forme, dans lequel l'unité d'affichage (23) affiche la quantité de matériau de fabrication sur le dispositif d'affichage (508).

8. Appareil de traitement d'informations (20) selon la revendication 7, comprenant en outre en sélecteur de réception (33) pour recevoir un résultat de sélection indiquant lesquelles des données de forme avant la rotation et des données de forme après la rotation par l'unité de transfert (25) sont utilisées pour fabriquer objet 3D par l'appareil de fabrication de laminage (70) conformément aux données de forme, dans lequel l'unité d'affichage (23) affiche le temps de fabrication et/ou la quantité de matériau de fabrication avant la rotation par l'unité de transfert (25) et affiche le temps de fabrication et/ou la quantité de matériau de fabrication après la rotation par l'unité de transfert (25) sur le dispositif d'affichage (508).

9. Système de fabrication (1) comprenant : l'appareil de traitement d'informations (20) selon l'une quelconque des revendications 1 à 8, et l'appareil de fabrication de laminage (70).

10. Procédé pour générer des données de fabrication pour fabriquer un objet fabriqué en 3D, le procédé comprenant :

   l'envoi, à partir d'un appareil de traitement d'informations (20) vers un appareil de fabrication de laminage (70) qui lamine un matériau pour fabriquer un objet 3D, de données de fabrication générées à partir de données de forme stockées dans une mémoire (2001), dans lequel les données de fabrication sont des informations interprétées par l'appareil de fabrication de laminage (70) pour fabriquer l'objet 3D et les données de forme sont des données représentant une forme de l'objet 3D à fabriquer,

l'affichage, sur un dispositif d'affichage (508), des données de forme de l'objet 3D à fabriquer,

la réception d'une entrée indiquant une direction dans laquelle renforcer l'objet 3D,

le calcul d'un angle de rotation, l'angle de rotation étant l'angle entre la direction reçue et un plan horizontal de l'appareil de fabrication de laminage,

la rotation des données de forme de l'objet 3D à fabriquer pour renforcer l'objet 3D dans la direction reçue, et

la génération des données de fabrication à partir de données de forme tournées.

11. Moyen de support contenant un code lisible par ordinateur pour commander un ordinateur afin d'exécuter le procédé selon la revendication 10.

# FIG. 1

```
        20                    2                         70
┌──────────────┐                          ┌──────────────┐
│ INFORMATION  │        ╱⎯⎯╲              │  LAMINATION  │
│  PROCESSING  │───────( ╳ )──────────────│  FABRICATING │
│  APPARATUS   │        ╲⎯⎯╱              │  APPARATUS   │
└──────────────┘          │               └──────────────┘
                          │                        90
                          │               ┌ ─ ─ ─ ─ ─ ─ ─┐
                          └───────────────    SERVER      
                                          └ ─ ─ ─ ─ ─ ─ ─┘
```

1

# FIG. 2

```
                                      504
                                    ┌────┐
                                    │ HD │
                                    └────┘
                                      ↕ 505
   501       502       503        ┌──────┐    508        515
 ┌──────┐  ┌──────┐  ┌──────┐     │ HDD  │  ┌────────┐  ┌──────┐
 │ CPU  │  │ ROM  │  │ RAM  │     └──────┘  │DISPLAY │  │ USB  │
 └──────┘  └──────┘  └──────┘               │ DEVICE │  │ I/F  │
                                            └────────┘  └──────┘
                                                                  510
 ─────┬─────────┬─────────┬─────────┬───────────┬───────────┬────
      │         │         │         │           │           │
 ┌─────────┐ ┌──────────┐ ┌───────┐ ┌─────────┐ ┌───────────┐
 │ NETWORK │ │ KEYBOARD │ │ MOUSE │ │  MEDIA  │ │  OPTICAL  │
 │   I/F   │ │          │ │       │ │  DRIVE  │ │   DRIVE   │
 └─────────┘ └──────────┘ └───────┘ └─────────┘ └───────────┘
    509         511         512        507  ↕      514  ↕
                                    ┌───────────┐   ⊚
                                    │ RECORDING │
                                    │  MEDIUM   │
                                    └───────────┘
                                     506          513
```

20

20

# FIG. 3A

# FIG. 3B

# FIG. 4

INFORMATION PROCESSING APPARATUS ⌐20

3D MODEL DATA READING UNIT ⌐22

3D MODEL DISPLAY UNIT ⌐23

STRENGTH DIRECTION RECEIVER ⌐24

3D MODEL RELOCATION UNIT ⌐25

SLICING UNIT ⌐26

PRINTING DATA GENERATOR ⌐27

DATA PROCESSOR ⌐29

STORAGE UNIT ⌐2000

PROGRAM ⌐2010

3D MODEL DATA MEMORY ⌐2001

COMMUNICATION UNIT ⌐21

GENERAL CONTROLLER ⌐28

FABRICATION TIME CALCULATOR ⌐31

FABRICATING MATERIAL AMOUNT CALCULATOR ⌐32

FABRICATING PATTERN SELECTION RECEIVER ⌐33

FABRICATING START DETERMINATION RECEIVER ⌐34

LAMINATION FABRICATING APPARATUS ⌐70

FABRICATING UNIT ⌐71

EP 3 273 673 B1

# FIG. 5A

# FIG. 5B

```
G1 X10 Y10 F600
G1 X20 Y10 E5 F600
```

# FIG. 6A

# FIG. 6B

# FIG. 6C

# FIG. 7A

# FIG. 7B

# FIG. 7C

# FIG. 8

```
                      ( START )
                          │
                          ▼
   ┌──────────────────────────────────────────────┐  ⟋S110
   │          READ 3D MODEL DATA                   │
   └──────────────────────────────────────────────┘
                          │
                          ▼
   ┌──────────────────────────────────────────────┐  ⟋S120
   │            DISPLAY 3D MODEL                   │
   └──────────────────────────────────────────────┘
                          │          S130
                          ▼      ⟋
              ╱⟍    INPUT        ⟍
           ╱   DIRECTION TO REINFORCE 3D-FABRICATED  ⟍   NO
         ⟨            OBJECT?                          ⟩────────┐
           ⟍                                        ╱          │
              ⟍           │ YES                  ╱             │
                          ▼                                    │
   ┌──────────────────────────────────────────────┐  ⟋S140    │
   │ RECEIVE DIRECTION TO REINFORCE 3D-FABRICATED OBJECT │     │
   └──────────────────────────────────────────────┘           │
                          │                                    │
                          ▼                                    │
   ┌──────────────────────────────────────────────┐  ⟋S150    │
   │          ROTATE 3D MODEL TO RELOCATE          │           │
   └──────────────────────────────────────────────┘           │
                          │                                    │
                          ▼                                    │
   ┌──────────────────────────────────────────────┐  ⟋S160    │
   │            DISPLAY 3D MODEL                   │           │
   └──────────────────────────────────────────────┘           │
                          │◄──────────────────────────────────┘
                          ▼
   ┌──────────────────────────────────────────────┐  ⟋S170
   │  FABRICATE 3D-FABRICATED OBJECT ACCORDING TO  │
   │            3D MODEL DATA                      │
   └──────────────────────────────────────────────┘
                          │
                          ▼
                      ( END )
```

# FIG. 9

```
                    ( START )
                        │
                        ▼
        ┌──────────────────────────────────┐  ⌐S210
        │      READ 3D MODEL DATA           │
        └──────────────────────────────────┘
                        │
                        ▼
        ┌──────────────────────────────────┐  ⌐S220
        │       DISPLAY 3D MODEL            │
        └──────────────────────────────────┘
                        │
                        ▼            S230
              INPUT                         NO
    ◁ DIRECTION TO REINFORCE 3D-FABRICATED ▷────┐
              OBJECT?                            │
                        │ YES                    │
                        ▼                        │
        ┌──────────────────────────────────┐ ⌐S240
        │ RECEIVE DIRECTION TO REINFORCE 3D-FABRICATED OBJECT │
        └──────────────────────────────────┘    │
                        │                        │
                        ▼                        │
        ┌──────────────────────────────────┐ ⌐S250
        │     ROTATE 3D MODEL TO RELOCATE   │    │
        └──────────────────────────────────┘    │
                        │                        │
                        ▼                        │
        ┌──────────────────────────────────┐ ⌐S260
        │       DISPLAY 3D MODEL            │    │
        └──────────────────────────────────┘    │
                        │            S262        │
         NO             ▼                        │
        ┌─◁    INPUT FABRICATING START?    ▷─────┤
        │                │ YES                   │
        │                ▼◀──────────────────────┘
        │   ┌──────────────────────────────────┐ ⌐S270
        │   │ FABRICATE 3D-FABRICATED OBJECT ACCORDING TO │
        │   │          3D MODEL DATA           │
        │   └──────────────────────────────────┘
        │                │
        │                ▼
        │            ( END )
```

# FIG. 10A

# FIG. 10B

# FIG. 10C

# FIG. 10D

# FIG. 11

START

READ 3D MODEL DATA ⟶ S310

CALCULATE FABRICATION TIME ⟶ S312

DISPLAY 3D MODEL AND FABRICATION TIME ⟶ S320

INPUT DIRECTION TO REINFORCE 3D-FABRICATED OBJECT? — S330 — NO

YES

RECEIVE DIRECTION TO REINFORCE 3D-FABRICATED OBJECT ⟶ S340

ROTATE 3D MODEL TO RELOCATE ⟶ S350

CALCULATE FABRICATION TIME ⟶ S352

DISPLAY 3D MODEL AND FABRICATION TIME ⟶ S360

NO — INPUT FABRICATING START? — S362

YES

FABRICATE 3D-FABRICATED OBJECT ACCORDING TO 3D MODEL DATA ⟶ S370

END

# FIG. 12A　　　　FIG. 12B

500　　61　　Z

500　　61　　Z　　62

# FIG. 13

```
                    ( START )
                        │
                        ▼
        ┌───────────────────────────────────┐      S410
        │       READ 3D MODEL DATA           │
        └───────────────────────────────────┘
                        │
                        ▼
        ┌───────────────────────────────────┐      S412
        │     CALCULATE FABRICATION TIME     │
        └───────────────────────────────────┘
                        │
                        ▼
        ┌───────────────────────────────────┐      S414
        │ CALCULATE AMOUNT OF FABRICATING MATERIAL │
        └───────────────────────────────────┘
                        │
                        ▼
        ┌───────────────────────────────────┐      S420
        │  DISPLAY 3D MODEL, FABRICATION TIME, AND  │
        │     AMOUNT OF FABRICATING MATERIAL │
        └───────────────────────────────────┘
                        │
                        ▼
                                              S430
                INPUT
        DIRECTION TO REINFORCE 3D-FABRICATED          NO
                OBJECT?
                        │ YES
                        ▼
        ┌───────────────────────────────────┐      S440
        │ RECEIVE DIRECTION TO REINFORCE 3D-FABRICATED OBJECT │
        └───────────────────────────────────┘
                        │
                        ▼
        ┌───────────────────────────────────┐      S450
        │    ROTATE 3D MODEL TO RELOCATE     │
        └───────────────────────────────────┘
                        │
                        ▼
        ┌───────────────────────────────────┐      S452
        │     CALCULATE FABRICATION TIME     │
        └───────────────────────────────────┘
                        │
                        ▼
        ┌───────────────────────────────────┐      S454
        │ CALCULATE AMOUNT OF FABRICATING MATERIAL │
        └───────────────────────────────────┘
                        │
                        ▼
        ┌───────────────────────────────────┐      S460
        │  DISPLAY 3D MODEL, FABRICATION TIME, AND  │
        │     AMOUNT OF FABRICATING MATERIAL │
        └───────────────────────────────────┘
                        │
                        ▼
                                              S462
        NO          INPUT FABRICATING START?
                        │ YES
                        ▼
        ┌───────────────────────────────────┐      S470
        │ FABRICATE 3D-FABRICATED OBJECT ACCORDING TO │
        │           3D MODEL DATA            │
        └───────────────────────────────────┘
                        │
                        ▼
                    ( END )
```

# FIG. 14

START

READ 3D MODEL DATA ⌐S510

CALCULATE FABRICATION TIME ⌐S512

CALCULATE AMOUNT OF FABRICATING MATERIAL ⌐S514

DISPLAY 3D MODEL, FABRICATION TIME, AND AMOUNT OF FABRICATING MATERIAL ⌐S520

INPUT DIRECTION TO REINFORCE 3D-FABRICATED OBJECT? S530 — NO

YES

RECEIVE DIRECTION TO REINFORCE 3D-FABRICATED OBJECT ⌐S540

ROTATE 3D MODEL TO RELOCATE ⌐S550

CALCULATE FABRICATION TIME ⌐S552

CALCULATE AMOUNT OF FABRICATING MATERIAL ⌐S554

DISPLAY 3D MODEL, FABRICATION TIME, AND AMOUNT OF FABRICATING MATERIAL BEFORE AND AFTER RELOCATION ⌐S560

NO — INPUT FABRICATING START? S562

YES

RECEIVE WHICH OF DATA IS USED BEFORE OR AFTER RELOCATION ⌐S564

FABRICATE 3D-FABRICATED OBJECT ACCORDING TO 3D MODEL DATA ⌐S570

END

# FIG. 15

**INFORMATION PROCESSING APPARATUS** ⌐20

- 3D MODEL DATA READING UNIT ⌐22
- 3D MODEL DISPLAY UNIT ⌐23
- STRENGTH DIRECTION RECEIVER ⌐24
- 3D MODEL RELOCATION UNIT ⌐25
- SLICING UNIT ⌐26
- PRINTING DATA GENERATOR ⌐27
- DATA PROCESSOR ⌐29

STORAGE UNIT ⌐2000
- PROGRAM ⌐2010
- 3D MODEL DATA MEMORY ⌐2001

- COMMUNICATION UNIT ⌐21
- GENERAL CONTROLLER ⌐28
- FABRICATION TIME CALCULATOR ⌐31
- FABRICATING MATERIAL AMOUNT CALCULATOR ⌐32
- FABRICATING PATTERN SELECTION RECEIVER ⌐33
- FABRICATING START DITERMINATION RECEIVER ⌐34
- STRENGTH DIRECTION CALCULATOR ⌐35
- STRENGTH PRIORITY RECEIVER ⌐36

**LAMINATION FABRICATING APPARATUS** ⌐70
- FABRICATING UNIT ⌐71

EP 3 273 673 B1

FIG. 16A

FIG. 16B

# FIG. 17

START

READ 3D MODEL DATA ⎯ S610

DISPLAY 3D MODEL ⎯ S620

INPUT
POINT AND FORCE DIRECTION TO
REINFORCE 3D-FABRICATED
OBJECT? ⎯ S630

NO

YES

RECEIVE POINT AND FORCE DIRECTION TO
REINFORCE 3D-FABRICATED OBJECT ⎯ S640

CALCULATE DIRECTION TO REINFORCE
ENTIRE 3D-FABRICATED OBJECT ⎯ S650

ROTATE 3D MODEL TO RELOCATE ⎯ S660

DISPLAY 3D MODEL ⎯ S670

FABRICATE 3D-FABRICATED OBJECT ACCORDING TO
3D MODEL DATA ⎯ S680

END

# FIG. 18

START

READ 3D MODEL DATA — S710

DISPLAY 3D MODEL — S720

INPUT
POINT AND FORCE DIRECTION TO
REINFORCE 3D-FABRICATED
OBJECT? — S730    NO

YES

RECEIVE POINT AND FORCE DIRECTION TO
REINFORCE 3D-FABRICATED OBJECT — S740

CALCULATE DIRECTION TO REINFORCE
ENTIRE 3D-FABRICATED OBJECT — S750

ROTATE 3D MODEL TO RELOCATE — S760

DISPLAY 3D MODEL — S770

NO    INPUT FABRICATING START? — S772

YES

FABRICATE 3D-FABRICATED OBJECT ACCORDING TO
3D MODEL DATA — S780

END

## FIG. 19A

## FIG. 19B

# FIG. 20

```
                    ┌─────────┐
                    │  START  │
                    └────┬────┘
                         ▼
┌──────────────────────────────────────────────┐
│            READ 3D MODEL DATA                  │──S810
└──────────────────────┬───────────────────────┘
                       ▼
┌──────────────────────────────────────────────┐
│            DISPLAY 3D MODEL                    │──S820
└──────────────────────┬───────────────────────┘
                       ▼
              INPUT                          S830
   POINT AND FORCE DIRECTION TO ──────────────── NO
      REINFORCE 3D-FABRICATED
             OBJECT?
                       │ YES
                       ▼
┌──────────────────────────────────────────────┐
│   RECEIVE POINT AND FORCE DIRECTION TO         │──S840
│     REINFORCE 3D-FABRICATED OBJECT             │
└──────────────────────┬───────────────────────┘
                       ▼
┌──────────────────────────────────────────────┐
│ RECEIVE PRIORITY OF POINT AND FORCE DIRECTION TO│──S842
│     REINFORCE 3D-FABRICATED OBJECT             │
└──────────────────────┬───────────────────────┘
                       ▼
┌──────────────────────────────────────────────┐
│   CALCULATE DIRECTION TO REINFORCE             │──S850
│     ENTIRE 3D-FABRICATED OBJECT                │
└──────────────────────┬───────────────────────┘
                       ▼
┌──────────────────────────────────────────────┐
│        ROTATE 3D MODEL TO RELOCATE             │──S860
└──────────────────────┬───────────────────────┘
                       ▼
┌──────────────────────────────────────────────┐
│            DISPLAY 3D MODEL                    │──S870
└──────────────────────┬───────────────────────┘
                       ▼
                                            S872
 NO ──────────── INPUT FABRICATING START? ────────
                       │ YES
                       ▼
┌──────────────────────────────────────────────┐
│  FABRICATE 3D-FABRICATED OBJECT ACCORDING TO   │──S880
│            3D MODEL DATA                       │
└──────────────────────┬───────────────────────┘
                       ▼
                    ┌─────────┐
                    │   END   │
                    └─────────┘
```

# FIG. 21

```
                    ┌─────────┐
                    │  START  │
                    └────┬────┘
                         ▼
┌──────────────────────────────────────────────────┐  S910
│              READ 3D MODEL DATA                    │
└──────────────────────┬─────────────────────────────┘
                       ▼
┌──────────────────────────────────────────────────┐  S912
│            CALCULATE FABRICATION TIME              │
└──────────────────────┬─────────────────────────────┘
                       ▼
┌──────────────────────────────────────────────────┐  S920
│      DISPLAY 3D MODEL AND FABRICATION TIME         │
└──────────────────────┬─────────────────────────────┘
                       ▼
                                                         S930
              ◇ INPUT                                         NO
         POINT AND FORCE DIRECTION TO
           REINFORCE 3D-FABRICATED
                 OBJECT? ◇
                       │ YES
                       ▼
┌──────────────────────────────────────────────────┐  S940
│      RECEIVE POINT AND FORCE DIRECTION TO          │
│        REINFORCE 3D-FABRICATED OBJECT              │
└──────────────────────┬─────────────────────────────┘
                       ▼
┌──────────────────────────────────────────────────┐  S942
│   RECEIVE PRIORITY OF POINT AND FORCE DIRECTION TO │
│        REINFORCE 3D-FABRICATED OBJECT              │
└──────────────────────┬─────────────────────────────┘
                       ▼
┌──────────────────────────────────────────────────┐  S950
│        CALCULATE DIRECTION TO REINFORCE            │
│          ENTIRE 3D-FABRICATED OBJECT               │
└──────────────────────┬─────────────────────────────┘
                       ▼
┌──────────────────────────────────────────────────┐  S960
│           ROTATE 3D MODEL TO RELOCATE              │
└──────────────────────┬─────────────────────────────┘
                       ▼
┌──────────────────────────────────────────────────┐  S962
│            CALCULATE FABRICATION TIME              │
└──────────────────────┬─────────────────────────────┘
                       ▼
┌──────────────────────────────────────────────────┐  S970
│      DISPLAY 3D MODEL AND FABRICATION TIME         │
└──────────────────────┬─────────────────────────────┘
                       ▼
                                                         S972
   NO     ◇      INPUT FABRICATING START?      ◇
                       │ YES
                       ▼
┌──────────────────────────────────────────────────┐  S980
│   FABRICATE 3D-FABRICATED OBJECT ACCORDING TO      │
│                3D MODEL DATA                        │
└──────────────────────┬─────────────────────────────┘
                       ▼
                  ┌─────────┐
                  │   END   │
                  └─────────┘
```

# FIG. 22

START

READ 3D MODEL DATA — S1010

CALCULATE FABRICATION TIME — S1012

CALCULATE AMOUNT OF FABRICATING MATERIAL — S1014

DISPLAY 3D MODEL, FABRICATION TIME, AND AMOUNT OF FABRICATING MATERIAL — S1020

INPUT POINT AND FORCE DIRECTION TO REINFORCE 3D-FABRICATED OBJECT? — S1030    NO

YES

RECEIVE POINT AND FORCE DIRECTION TO REINFORCE 3D-FABRICATED OBJECT — S1040

RECEIVE PRIORITY OF POINT AND FORCE DIRECTION TO REINFORCE 3D-FABRICATED OBJECT — S1042

CALCULATE DIRECTION TO REINFORCE ENTIRE 3D-FABRICATED OBJECT — S1050

ROTATE 3D MODEL TO RELOCATE — S1060

CALCULATE FABRICATION TIME — S1062

CALCULATE AMOUNT OF FABRICATING MATERIAL — S1064

DISPLAY 3D MODEL, FABRICATION TIME, AND AMOUNT OF FABRICATING MATERIAL — S1070

NO    INPUT FABRICATING START? — S1072

YES

FABRICATE 3D-FABRICATED OBJECT ACCORDING TO 3D MODEL DATA — S1080

END

# FIG. 23

```
                        ( START )
                           │
                           ▼
┌──────────────────────────────────────────────┐  S1110
│            READ 3D MODEL DATA                  │
└──────────────────────────────────────────────┘
                           │
                           ▼
┌──────────────────────────────────────────────┐  S1112
│         CALCULATE FABRICATION TIME             │
└──────────────────────────────────────────────┘
                           │
                           ▼
┌──────────────────────────────────────────────┐  S1114
│     CALCULATE AMOUNT OF FABRICATING MATERIAL   │
└──────────────────────────────────────────────┘
                           │
                           ▼
┌──────────────────────────────────────────────┐  S1120
│    DISPLAY 3D MODEL, FABRICATION TIME, AND     │
│         AMOUNT OF FABRICATING MATERIAL         │
└──────────────────────────────────────────────┘
                           │
                           ▼
              INPUT                                  S1130
        POINT AND FORCE DIRECTION TO                 ───── NO
        REINFORCE 3D-FABRICATED
               OBJECT?
                           │ YES
                           ▼
┌──────────────────────────────────────────────┐  S1140
│     RECEIVE POINT AND FORCE DIRECTION TO       │
│       REINFORCE 3D-FABRICATED OBJECT           │
└──────────────────────────────────────────────┘
                           │
                           ▼
┌──────────────────────────────────────────────┐  S1142
│   RECEIVE PRIORITY OF POINT AND FORCE DIRECTION TO │
│       REINFORCE 3D-FABRICATED OBJECT           │
└──────────────────────────────────────────────┘
                           │
                           ▼
┌──────────────────────────────────────────────┐  S1150
│        CALCULATE DIRECTION TO REINFORCE        │
│          ENTIRE 3D-FABRICATED OBJECT           │
└──────────────────────────────────────────────┘
                           │
                           ▼
┌──────────────────────────────────────────────┐  S1160
│         ROTATE 3D MODEL TO RELOCATE            │
└──────────────────────────────────────────────┘
                           │
                           ▼
┌──────────────────────────────────────────────┐  S1162
│         CALCULATE FABRICATION TIME             │
└──────────────────────────────────────────────┘
                           │
                           ▼
┌──────────────────────────────────────────────┐  S1164
│     CALCULATE AMOUNT OF FABRICATING MATERIAL   │
└──────────────────────────────────────────────┘
                           │
                           ▼
┌──────────────────────────────────────────────┐  S1170
│    DISPLAY 3D MODEL, FABRICATION TIME, AND     │
│   AMOUNT OF FABRICATING MATERIAL BEFORE AND    │
│              AFTER RELOCATION                   │
└──────────────────────────────────────────────┘
                           │
                           ▼                         S1172
   NO          INPUT FABRICATING START?
                           │ YES
                           ▼
┌──────────────────────────────────────────────┐  S1174
│     RECEIVE WHICH OF DATA IS USED BEFORE OR    │
│              AFTER RELOCATION                   │
└──────────────────────────────────────────────┘
                           │
                           ▼
┌──────────────────────────────────────────────┐  S1180
│   FABRICATE 3D-FABRICATED OBJECT ACCORDING TO  │
│              3D MODEL DATA                      │
└──────────────────────────────────────────────┘
                           │
                           ▼
                        ( END )
```

## REFERENCES CITED IN THE DESCRIPTION

**Patent documents cited in the description**

- JP 2012096426 A
- US 2015021832 A1
- US 2015310148 A1
- EP 2930694 A2

**Non-patent literature cited in the description**

- **PRASHANT KULKARNI et al.** A Review of Process Planning Techniques in Layered Manufacturing. *RAPID PROTOTYPING JOURNAL,* 01 March 2000, vol. 6 (1